# EUROPÄISCHE PATENTSCHRIFT

(11) **EP 3 374 229 B1**
(45) Veröffentlichungstag und Bekanntmachung des Hinweises auf die Patenterteilung: **09.03.2022**
(21) Anmeldenummer: 16791416.7
(22) Anmeldetag: 08.11.2016
(51) Int. Cl.: B60N 2/12, B60N 2/30

(54) **SITZVERSTELLMECHANISMUS EINES SITZES MIT EINER SCHWENK-SCHUBEINHEIT**
SEAT-ADJUSTING MECHANISM FOR A SEAT WITH A PIVOT-SLIDE UNIT
MÉCANISME DE RÉGLAGE DE SIÈGE D'UN SIÈGE POURVU D'UNE UNITÉ À PIVOTEMENT-POUSSÉE

(30) Priorität: 10.11.2015 DE 102015222133
(43) Veröffentlichungstag der Anmeldung: 19.09.2018
(73) Patentinhaber: Sitech Sitztechnik GmbH, 38442 Wolfsburg (DE)
(72) Erfinder: BECKER, Nicolas, 38165 Lehre (DE); BARKOW, Tomas, 38102 Braunschweig (DE); NIEWINOWSKI,Michal, 66-004 Zielona Gora (PL); SZEWCZYK, Michal, 59-170 Przemkow (PL); SCHNETTKER, Thorsten, 38170 Dahlum (DE); PYZIAK, Lukasz, 48-303 Nysa (PL); KLAJN, Stanislaw, 54-608 Wroclaw (PL); SOLIWODA, Tomasz, 53-033 Wroclaw (PL)
(74) Vertreter: Gulde & Partner
(86) Internationale Anmeldenummer: PCT/EP2016/076925
(87) Internationale Veröffentlichungsnummer: WO 2017/080976

(56) Entgegenhaltungen:
- WO-A1-2014/075819
- DE-A1-102013 006 485
- US-A1- 2012 153 694

## Beschreibung

Die Erfindung betrifft einen Sitz mit einem Sitzverstellmechanismus zur Schaffung einer Easy-Entry-Kinematik eines Sitzes zum erleichterten Einstieg und Ausstieg einer Person in/aus einen/einem Innenraum eines Kraftfahrzeuges.

Bei einer Vielzahl von herkömmlichen Verstellkinematiken zur Easy-Entry-Verstellung von Fahrzeugsitzen wird der hintere Fuß von einer Sitzoberschiene einer aus Sitzoberschiene und Sitzunterschiene bestehenden Sitzschieneneinheit entkoppelt und über mindestens einen im vorderen Bereich ebenfalls auf der Sitzoberschiene angeordneten Gelenkhebel auf einer Kurvenbahn nach vorne geschwenkt. Ein Nachteil dieser Lösung besteht in dem benötigten freien Schwenkbereich zwischen der Oberseite des Rückenlehnenteiles beziehungsweise der Oberseite seiner Kopfstütze und dem Dachhimmel des Innenraumes des Kraftfahrzeugsitzes. Ein anderer Nachteil besteht darin, dass das Zurückklappen des Fahrzeugsitzes nur möglich ist, wenn der Bereich unterhalb des Fahrzeugsitzes freigehalten wird, damit ein Zurückklappen des Fahrzeugsitzes möglich ist. Stellvertretend für diese gattungsgemäße Lösung werden die Druckschriften DE 10 2007 036 450 B3 und DE 10 2008 050 468 B3 genannt.

Die Druckschrift DE 10 2013 012 284 A1 offenbart einen Fahrzeugsitz mit einem Easy-Entry-Verstellmechanismus. Ausgehend von einer Ausgangslage des Fahrzeugsitzes erfolgt die Verstellung des Fahrzeugsitzes schrittweise. In einem ersten Schritt wird durch die Betätigung eines Entriegelungselementes die Klappung des Rückenlehnenteiles vorgenommen, wobei das Entriegelungselement im oberen Bereich des Rückenlehnenteiles angeordnet ist. In dem ersten Schritt kommt es in der gewöhnlichen Einbaulage des Fahrzeugsitzes zur Verstellung des Rückenlehnenteiles in Fahrzeuglängsrichtung des Fahrzeuges, wobei das Sitzteil des Fahrzeugsitzes durch eine zwischen einer Rückenlehnenteilstruktur und einer Sitzteilstruktur angeordnete Schwinge in Fahrzeuglängsrichtung mitgenommen wird. Ein hinterer Fuß des Fahrzeugsitzes ist über eine Rückenlehnenentriegelungseinheit mit dem Rückenlehnenteil verbunden. Über die Rückenlehnenentriegelungseinheit ist die Klappung des Rückenlehnenteiles gegenüber dem Sitzteil möglich. Der hintere Fuß steht fest mit einer Sitzoberschiene in Verbindung. Die Klappung des Rückenlehnenteiles zur Erreichung der Easy-Entry-Position in dem ersten Schritt geht mit einer translatorischen Bewegung der Sitzoberschiene gegenüber einer Sitzunterschiene einher. Die Klappbewegung des Rückenlehnenteiles wird in dem ersten Schritt durch eine zwischen dem Rückenlehnenteil und dem Sitzteil angeordnete Schwinge direkt auf das Sitzteil zwangsgekoppelt übertragen. Die Veränderung der Position des Rückenlehnenteiles in die Easy-Entry-Position erfolgt somit zusammengefasst über eine Ansteuerung der Rückenlehnenentriegelungseinheit, über die auch die Freigabe der Sitzoberschiene gegenüber der Sitzunterschiene erfolgt, damit der Fahrzeugsitz in einem zweiten Schritt über einen auf der Sitzoberschiene schwenkbar angeordneten vorderen Schwenkarm auch in Fahrzeuglängsrichtung verlagerbar ist. Die Rückenlehnenentriegelungseinheit muss dafür relativ aufwändig ausgestaltet werden.

Bekannt ist ferner die Druckschrift WO 2015/107213A1. Die Druckschrift offenbart einen Fahrzeugsitz mit einem Sitzteil und einer Lehne, wobei der Fahrzeugsitz ein mit der Lehne verbundenes hinteres Beschlagteil und ein mit dem Sitzteil verbundenes vorderes Beschlagteil aufweist, wobei das hintere Beschlagteil mit dem vorderen Beschlagteil gekoppelt ist. Die Kopplung umfasst eine Kulissenführung und einen in der Kulissenführung geführten Bolzen, wobei insbesondere das vordere Beschlagteil die Kulissenführung und das hintere Beschlagteil den Bolzen aufweist. Außerdem weist das Sitzteil eine weitere Kulissenführung auf, die mit einem weiteren Bolzen eines zwischen dem hinteren Beschlagteil und dem Sitzteil angeordneten Kopplungselementes zusammenwirkt, so dass das Kopplungselement schwenkbar und längsverschiebbar an dem Sitzteil gelagert ist.

Als Stand der Technik werden ergänzend die Druckschriften DE 10 2013 006 485 A1, US 2012/153694 A1 und WO 2014/075819 A1 genannt.

Ausgehend von diesem Stand der Technik liegt der Erfindung die Aufgabe zugrunde, eine alternative die Nacheile überwindende und einfach aufgebaute Sitzverstellkinematik zur Realisierung einer Easy-Entry-Funktion eines Sitzes zu schaffen.

Ausgangspunkt der Erfindung ist ein Sitz mit einem Sitzverstellmechanismus zum erleichterten Einstieg und Ausstieg einer Person in/aus einen/einem Innenraum eines Kraftfahrzeuges, bei der ein Rückenlehnenteil über eine Schwinge mit einem Sitzteil zwangsgekoppelt ist, so dass eine Verstellbewegung des Rückenlehnenteiles auf das Sitzteil übertragen wird.

Erfindungsgemäß ist vorgesehen, dass das Rückenlehnenteil und das Sitzteil des Sitzes in einem ersten Schritt ausgehend von einer Ausgangsposition um ein erstes vorgebbares horizontales Längenmaß mittels einer mit einer Oberschiene einer Sitzschiene in Verbindung stehenden Verschiebevorrichtung in eine Zwischenposition verlagert werden, wobei das Rückenlehnenteil über ein gegenüber der Verschiebevorrichtung um eine erste Koppelelement-Schwenkachse verschwenkbares Koppelelement starr mit einer Rückenlehnenentriegelungseinheit des Rückenlehnenteiles in Verbindung steht.

Dadurch wird das Rückenlehnenteil in einem ersten Schritt um einen ersten vorgebbaren horizontalen Rückenlehnenteil-Verstellweg in Längsrichtung verschoben und gleichzeitig die Neigung des Rückenlehnenteiles von seiner Ausgangsposition um einen vorgebbaren Winkel in seine Zwischenposition verstellt, wobei das sich über einen Schwenkarm auf der Oberschiene der Sitzschiene direkt oder indirekt abstützende zwangsgekoppelte Sitzteil in dem ersten Schritt um einen ersten horizontalen Sitzteil-Verstellweg in Längsrichtung verschoben und eine Vorderseite des Sitzteiles gleichzeitig um einen vertikalen Verstellweg abgesenkt wird, wonach das Rückenlehnenteil und das Sitzteil gemeinsam in einem zweiten Schritt durch eine Entriegelung der Oberschiene gegenüber einer karosseriefesten Unterschiene der Sitzschiene gleichzeitig um einen vorgebbaren zweiten horizontalen Verstellweg weiter in Längsrichtung in eine Easy-Entry-Position verschoben werden.

Das Rückenlehnenteil und das Sitzteil werden somit in vorteilhafter Weise in dem ersten Schritt gleichzeitig in Längsrichtung nach vorne verschoben und dabei verschwenkt, da der Sitzverstellmechanismus über eine Schwenk-Schubeinheit verfügt, deren Bauteile nachfolgend detailliert erläutert werden. In vorteilhafter Weise ist die Schwenk- und Schubbewegung des Rückenlehnenteiles und des Sitzteiles in dem ersten Schritt möglich, ohne dass eine Neigungsverstellung des Rückenlehnenteiles über die Rückenlehnenentriegelungseinheit des Rückenlehnenteiles erfolgt.

Dabei ist das Koppelelement starr mit der Rückenlehnenentriegelungseinheit des Rückenlehnenteiles verbunden, wobei das Koppelelement stets mit der Verschiebevorrichtung und damit mit der Oberschiene gekoppelt ist. Das Koppelelement ist erfindungsgemäß gegenüber der Verschiebevorrichtung um eine erste Koppelelement-Schwenkachse verschwenkbar. Die Anbindung der Rückenlehnenentriegelungseinheit über das verschwenkbare Koppelelement an der Verschiebevorrichtung ermöglicht in vorteilhafter Weise die Schwenk- und Schubbewegung des Rückenlehnenteiles nach vorn in Längsrichtung ohne Betätigung der Rückenlehnenentriegelungseinheit.

Erfindungsgemäß ist vorgesehen, dass sich das über den Schwenkarm auf der Oberschiene der Sitzschiene (erste und zweite Ausführungsform) direkt abstützende zwangsgekoppelte Sitzteil oder das über den Schwenkarm auf einer mit der Oberschiene der Sitzschiene in Verbindung stehenden Verschiebevorrichtung (dritte Ausführungsform) indirekt abstützende zwangsgekoppelte Sitzteil in dem ersten Schritt um den ersten horizontalen Sitzteil-Verstellweg verschoben wird und dabei die Vorderseite des Sitzteiles gleichzeitig um den vertikalen Verstellweg abgesenkt wird.

Das nach vorne Verschieben in Längsrichtung und gleichzeitige Absenken der Vorderseite des Sitzteiles ermöglicht in vorteilhafter Weise eine platzsparende Verstellung des Sitzes.

Erfindungsgemäß ist ferner, dass das Rückenlehnenteil und das Sitzteil gemeinsam in dem zweiten Schritt durch eine Entriegelung der Oberschiene gegenüber einer karosseriefesten Unterschiene der Sitzschiene gleichzeitig um den vorgebbaren zweiten horizontalen Verstellweg weiter in Längsrichtung nach vorne in eine Easy-Entry-Position verschoben werden. Es wird deutlich, dass in vorteilhafter Weise nach der Schwenk- und Schubbewegung des Rückenlehnenteiles und des Sitzteiles in dem ersten Schritt eine weitere Schubbewegung des Rückenlehnenteiles und des Sitzteiles in dem zweiten Schritt bewirkt wird, der durch einfache strukturelle Maßnahmen, wie Oberschiene und Unterschiene realisiert wird.

In vorteilhafter Weise ist bereits bei der Durchführung des ersten Schrittes ein erleichterter Einstieg und Ausstieg einer Person in/aus den/dem Innenraum des Kraftfahrzeuges möglich, da in dem Bereich hinter dem Rückenlehnenteil ein Freiraum geschaffen ist, der auch im Fußbereich frei von jeglichen Bauteilen des Sitzverstellmechanismus störungsfrei zugänglich ist. Der nach Durchführung des ersten Schrittes gebildete Freiraum wird nach Durchführung des zweiten Schrittes sogar noch vergrößert, wie in dem nachfolgenden Beschreibungsteil anhand von zwei Ausführungsformen detailliert näher erläutert ist.

In bevorzugter Ausgestaltung der Erfindung ist das Rückenlehnenteil in jeder Position unabhängig von dem Sitzteil über die Rückenlehnenentriegelungseinheit in seiner Neigung gegenüber dem Sitzteil reversibel verstellbar, wobei die Rückenlehnenentriegelungseinheit einen Drehverstellmechanismus mit einem am Rückenlehnenteil angeordneten ersten Beschlagteil und einem am Koppelelement starr angeordneten zweiten Beschlagteil aufweist.

Es wird deutlich, dass die Rückenlehnenentriegelungseinheit in keinem der Schritte der erfindungsgemäßen Easy-Entry-Funktion entriegelt werden muss.

Es versteht sich, dass die Rückenlehnenentriegelungseinheit außerhalb der Easy-Entry-Funktion zur Neigungsverstellung des Rückenlehnenteiles und zur Erzielung der Ladebodenposition entriegelbar ist.

Eine Entriegelung der Rückenlehnenentriegelungseinheit erfolgt jedoch nicht während der Easy-Entry-Verstellung des Sitzes, wodurch die Rückenlehnenentriegelungseinheit im Vergleich zu einer Rückenlehnenentriegelungseinheit, die in die Easy-Entry-Verstellung des Sitzes einbezogen ist, weniger aufwändig ausgestaltet werden muss.

In bevorzugter Ausgestaltung der Erfindung ist vorgesehen, dass das Koppelelement Teil des zweiten Beschlagteiles (einteilig) oder mit dem zweiten Beschlagteil (zweiteilig) starr verbunden ist. Mit anderen Worten ist vorgesehen, dass die starre Verbindung zwischen dem Koppelelement und dem zweiten Beschlagteil durch eine einteilige oder zweiteilige Ausgestaltung ausgebildet ist.

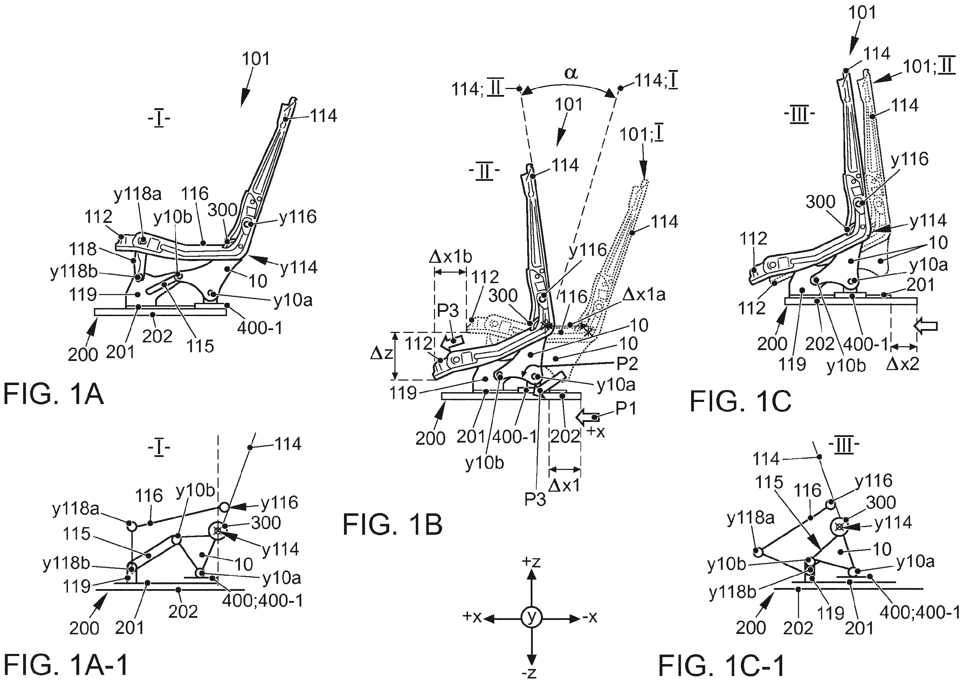

In einer ersten Ausführungsform (vergleiche Figuren 1A bis 1C-1) ist in bevorzugter Ausgestaltung vorgesehen, dass das Rückenlehnenteil und das Sitzteil in dem ersten Schritt ausgehend von der Ausgangsposition in die Zwischenposition über eine Kulissenanbindung zwangsgesteuert und zwangsgeführt werden, wobei das Koppelelement über ein Kulissenelement mit der in einem oberschienenfesten Kulissenteil angeordneten Kulisse der Kulissenanbindung in Verbindung steht, wodurch das Koppelelement während der Zwangssteuerung und Zwangsführung des Koppelelementes über das Kulissenelement in der Kulisse gegenüber der Kulisse um eine zweite Koppelelement-Schwenkachse schwenkbar ist. Innerhalb der ersten Ausführungsform ist vorgesehen, dass das oberschienenfeste Kulissenteil, in dem die Kulisse angeordnet ist, ein oberschienenfestes vorderes Fußteil ist. Durch die Kulissenanbindung wird in vorteilhafter Weise dafür gesorgt, dass das Rückenlehnenteil und das mit dem Rückenlehnenteil zwangsgekoppelte Sitzteil bei ihrem Bewegungsablauf von der Ausgangsposition in die Easy-Entry-Position zwangsgesteuert und zwangsgeführt werden. Der Sitz weist dadurch eine hohe Stabilität und genaue Führung innerhalb seines Bewegungsablaufes auf. Zudem werden in vorteilhafter Weise zusätzlich in den Fahrzeugsitz eingeleitete Kräfte, insbesondere Crashkräfte, über die Kulissenanbindung über die Sitzschiene in die Karosserie des Kraftfahrzeuges eingeleitet werden. In der nachfolgenden Beschreibung zu der ersten Ausführungsform wird anhand der Figuren noch detailliert auf die Einleitung von Kräften in die Karosserie eingegangen.

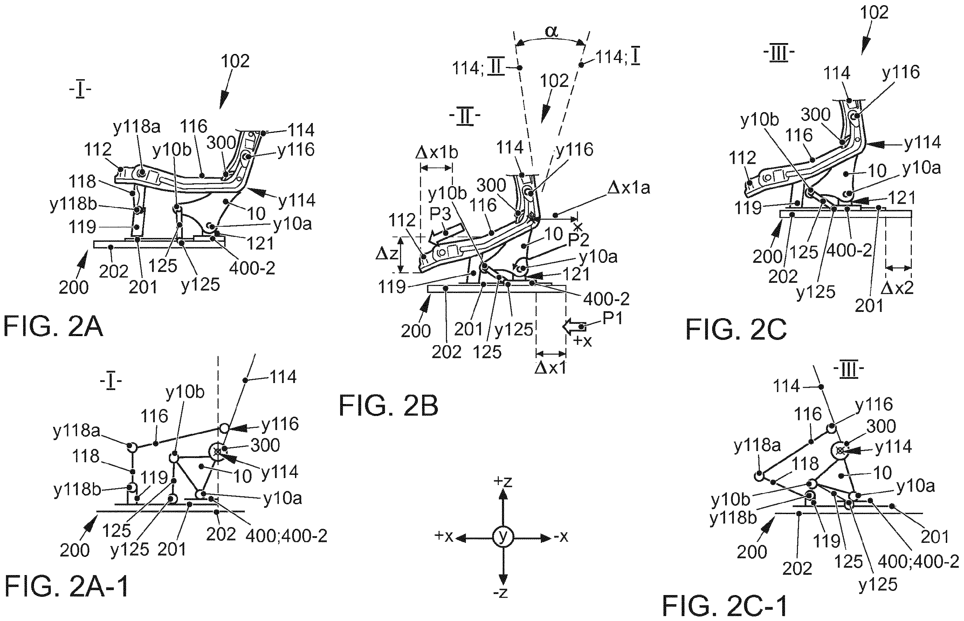

In einer zweiten Ausführungsform (vergleiche Figuren 2A bis 2E) ist in bevorzugter Ausgestaltung vorgesehen, dass das Rückenlehnenteil und das Sitzteil in dem ersten Schritt ausgehend von der Ausgangsposition in die Zwischenposition über ein Hebelgelenk einer Hebelgelenkanbindung zwangsgesteuert und zwangsgeführt werden, wobei das Koppelelement einends um eine zweite Koppelelement-Schwenkachse schwenkbar über das Hebelgelenk und anderenends um eine Hebelgelenk-Schwenkachse schwenkbar mit einer Oberschiene der Sitzschiene in Verbindung steht, wodurch das Koppelelement während der Zwangssteuerung und Zwangsführung des Koppelelementes über das Hebelgelenk um die zweite Koppelelement-Schwenkachse schwenkbar ist. Die Hebelgelenkanbindung sorgt analog zu der ersten Ausführungsform dafür, dass das Rückenlehnenteil und das mit dem Rückenlehnenteil zwangsgekoppelte Sitzteil in vorteilhafter Weise bei ihrem Bewegungsablauf von der Ausgangsposition in die Easy-Entry-Position zwangsgesteuert und zwangsgeführt werden. Der Sitz weist dadurch eine hohe Stabilität und genaue Führung innerhalb seines Bewegungsablaufes auf. Zudem werden in vorteilhafter Weise zusätzlich in den Fahrzeugsitz eingeleitete Kräfte, insbesondere Crashkräfte, über das Hebelgelenk über die Sitzschiene in die Karosserie des Kraftfahrzeuges eingeleitet werden, wie ebenfalls im Beschreibungsteil noch detaillierter erläutert wird.

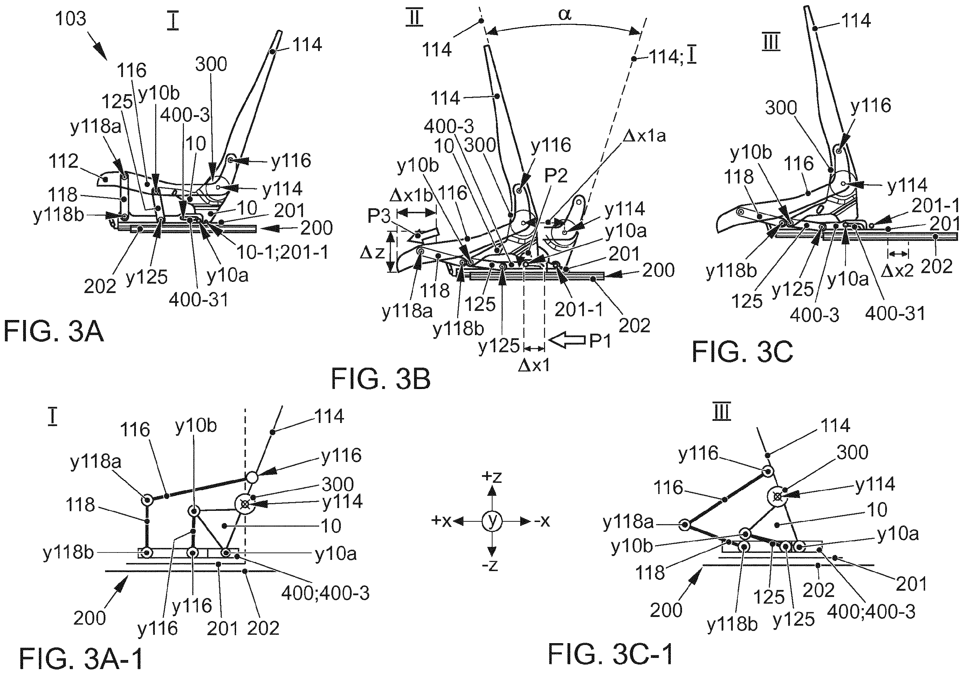

In einer dritten Ausführungsform (vergleiche Figuren 3A bis 3C-1) ist in bevorzugter Ausgestaltung vorgesehen, dass das Rückenlehnenteil und das Sitzteil in dem ersten Schritt ausgehend von der Ausgangsposition in die Zwischenposition über ein Hebelgelenk einer Hebelgelenkanbindung zwangsgesteuert und zwangsgeführt werden, wobei das Koppelelement einends über das Hebelgelenk um eine zweite Koppelelement-Schwenkachse schwenkbar und anderenends um eine Hebelgelenk-Schwenkachse schwenkbar mit einer Verschiebevorrichtung in Verbindung steht, die ihrerseits fest mit einer Oberschiene der Sitzschiene verbunden ist, wodurch das Koppelelement während der Zwangssteuerung und Zwangsführung des Koppelelementes über das Hebelgelenk um die zweite Koppelelement-Schwenkachse schwenkbar ist. Die Hebelgelenkanbindung sorgt analog zu der ersten und zweiten Ausführungsform dafür, dass das Rückenlehnenteil und das mit dem Rückenlehnenteil zwangsgekoppelte Sitzteil in vorteilhafter Weise bei ihrem Bewegungsablauf von der Ausgangsposition in die Easy-Entry-Position zwangsgesteuert und zwangsgeführt werden. Der Sitz weist dadurch eine hohe Stabilität und genaue Führung innerhalb seines Bewegungsablaufes auf. Zudem werden in vorteilhafter Weise zusätzlich in den Fahrzeugsitz eingeleitete Kräfte, insbesondere Crashkräfte, über das Hebelgelenk in die Verschiebevorrichtung und von dort über die Sitzschiene in die Karosserie des Kraftfahrzeuges eingeleitet, wie ebenfalls im Beschreibungsteil noch detaillierter erläutert wird.

In einer bevorzugten Ausgestaltung der Erfindung ist das Koppelelement direkt mit der Verschiebevorrichtung oder indirekt über ein hinteres Fußteil mit der auf der Oberschiene angeordneten und gegenüber der Oberschiene längsverschieblichen Verschiebevorrichtung verbunden.

Bevorzugt ist ferner, dass die Verschiebevorrichtung mit der Oberschiene der Sitzschiene in Verbindung steht, und dabei entweder auf der Oberschiene der Sitzschiene (wie in den Ausführungsformen der Beschreibung dargestellt) oder in der Oberschiene der Sitzschiene oder neben der Oberschiene der Sitzschiene angeordnet ist. Durch die Anordnung in oder neben der Oberschiene der Sitzschiene baut der Sitz in vorteilhafter Weise in seiner Höhe weniger aus.

Mittels des zuvor anhand von funktionalen und strukturellen Merkmalen gekennzeichneten Sitzverstellmechanismus ist eine Sitzverstellkinematik, insbesondere eine Easy-Entry-Kinematik eines Sitzes zum erleichterten Einstieg und Ausstieg einer Person in/aus einen/einem Innenraum eines Kraftfahrzeuges bewirkbar, bei der ein Rückenlehnenteil mit einem Sitzteil zwangsgekoppelt ist, so dass eine Verstellbewegung des Rückenlehnenteiles auf das Sitzteil übertragen wird.

Die Sitzverstellkinematik oder mit anderen Worten der Bewegungsablauf bei der Verstellung des Sitzes ist erfindungsgemäß durch zwei Schritte gekennzeichnet:
Erster Schritt:
   Das Rückenlehnenteil und das Sitzteil des Sitzes werden in dem ersten Schritt ausgehend von einer Ausgangsposition um ein erstes vorgebbares horizontales Längenmaß in eine Zwischenposition verlagert, wodurch das Rückenlehnenteil um einen vorgebbaren ersten horizontalen Rückenlehnenteil-Verstellweg in Längsrichtung verschoben und gleichzeitig die Neigung des Rückenlehnenteiles von seiner Ausgangsposition um einen vorgebbaren Winkel in seine Zwischenposition verstellt wird, wodurch das zwangsgekoppelte Sitzteil in dem ersten Schritt ebenfalls um einen ersten vorgebbaren horizontalen Sitzteil-Verstellweg verschoben und eine Vorderseite des Sitzteiles gleichzeitig um einen vorgebbaren vertikalen Verstellweg abgesenkt wird.
Zweiter Schritt:
   Das Rückenlehnenteil und das Sitzteil werden gemeinsam in dem zweiten Schritt gleichzeitig um einen vorgebbaren zweiten horizontalen Verstellweg weiter in Längsrichtung in eine Easy-Entry-Position verschoben.

Dazu weist der Sitzverstellmechanismus in der ersten und zweiten Ausführungsform als Verschiebevorrichtung eine Verschiebe-Gleitvorrichtung und in der dritten Ausführungsform als Verschiebevorrichtung eine Verschiebe-Kulissenvorrichtung auf, wie in der nachfolgenden detaillierten Beschreibung der Ausführungsformen näher erläutert wird.

Die Erfindung wird nachfolgend in drei Ausführungsformen anhand der zugehörigen Zeichnungen näher erläutert.

Es zeigen:
- Figur 1A: eine Seitendarstellung eines Sitzes in einer Ausgangsposition mit einer Easy-Entry-Sitzverstellkinematik gemäß einer ersten Ausführungsform;
- Figur 1A-1: eine Darstellung der Kinematik gemäß Figur 1A;
- Figur 1B: eine Seitendarstellung des Sitzes in einer Zwischenposition mit der Easy-Entry-Sitzverstellkinematik gemäß der ersten Ausführungsform;
- Figur 1C: eine Seitendarstellung des Sitzes in einer Endposition mit der Easy-Entry-Sitzverstellkinematik gemäß der ersten Ausführungsform;
- Figur 1C-1: eine Darstellung der Kinematik gemäß Figur 1C;
- Figur 2A: eine Seitendarstellung eines Sitzes in einer Ausgangsposition mit einer Easy-Entry-Sitzverstellkinematik gemäß einer zweiten Ausführungsform;
- Figur 2A-1: eine Darstellung der Kinematik gemäß Figur 2A;
- Figur 2B: eine Seitendarstellung des Sitzes in einer Zwischenposition mit der Easy-Entry-Sitzverstellkinematik gemäß der zweiten Ausführungsform;
- Figur 2C: eine Seitendarstellung des Sitzes in einer Endposition mit der Easy-Entry-Sitzverstellkinematik gemäß der zweiten Ausführungsform;
- Figur 2C-1: eine Darstellung der Kinematik gemäß Figur 2C;

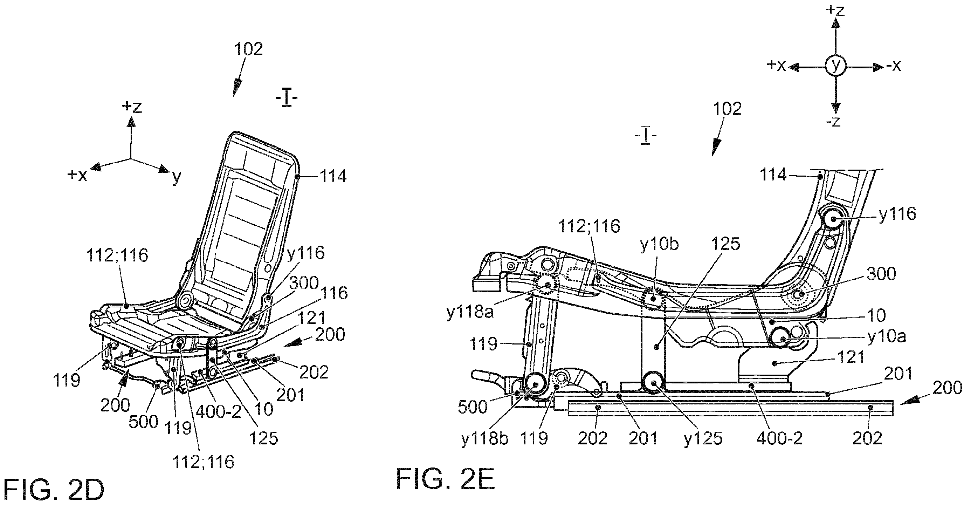

- Figur 2D: ein Prototyp des Sitzes mit der Easy-Entry-Sitzverstellkinematik gemäß der zweiten Ausführungsform in einer perspektivischen Darstellung; und
- Figur 2E: der Prototyp des Sitzes mit der Easy-Entry-Sitzverstellkinematik gemäß der zweiten Ausführungsform in einer Seitendarstellung;
- Figur 3A: eine Seitendarstellung eines Sitzes in einer Ausgangsposition mit einer Easy-Entry-Sitzverstellkinematik gemäß einer dritten Ausführungsform;
- Figur 3A-1: eine Darstellung der Kinematik gemäß Figur 2A;
- Figur 3B: eine Seitendarstellung des Sitzes in einer Zwischenposition mit der Easy-Entry-Sitzverstellkinematik gemäß der dritten Ausführungsform;
- Figur 3C: eine Seitendarstellung des Sitzes in einer Endposition mit der Easy-Entry-Sitzverstellkinematik gemäß der dritten Ausführungsform;
- Figur 3C-1: eine Darstellung der Kinematik gemäß Figur 2C.

Die Erfindung wird nachfolgend erläutert. Für die Zwecke der vorliegenden Beschreibung soll mit"+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Nachfolgend wird zunächst der Aufbau des Sitzes, insbesondere Fahrzeugsitzes, in einer Zusammenschau aller Figuren erläutert, wobei auf diejenigen Bauteile Bezug genommen wird, die in der ersten, zweiten und dritten Ausführungsform analog angeordnet und kinematisch analog miteinander verbunden sind.

Im Anschluss an diese Erläuterungen wird auf die Unterschiede zwischen den drei Ausführungsformen näher eingegangen.

Die Figuren 1A bis 1C zeigen einen Fahrzeugsitz 101 in einer ersten Ausführungsform und die Figuren 2A bis 2C zeigen einen Fahrzeugsitz 102 in einer zweiten Ausführungsform und die Figuren 3A bis 3C zeigen einen Fahrzeugsitz 103 in einer dritten Ausführungsform jeweils in mehreren Seitenansichten. Die Beschreibung erfolgt anhand der dargestellten Seitenansichten.

Die prinzipielle Ausgestaltung der Fahrzeugsitze 101, 102, 103 und die spezielle technische Lösung gemäß der zweiten Ausführungsform wird ergänzend in zwei Darstellungen gemäß den Figuren 2D und 2E gezeigt. Es wird empfohlen, alle Figuren in einer Zusammenschau zu betrachten.

Die Fahrzeugsitze 101, 102, 103 sind in Längsrichtung eines Fahrzeugsitzes in +/- x-Richtung gesehen axialsymmetrisch aufgebaut, das heißt, die andere nicht sichtbare Seite der Fahrzeugsitze 101, 102 ist analog aufgebaut, weshalb eine Beschreibung anhand einer Seitenansicht umfassend aussagekräftig ist.

Zudem sind auf die Darstellung in den Figuren 1A, 1C und 2A, 2C und 3A, 3C Bezug nehmend Figuren 1A-1 sowie 1C-1 und 2A-1 sowie 2C-1 und 3A-1 sowie 3C-1 dargestellt, deren Darstellungen auf die Kinematik der Fahrzeugsitze 101, 102 reduziert sind.

Diese Seitenansichten der Fahrzeugsitze 101, 102, 103 gelten auch stellvertretend für geteilte oder ungeteilte Sitzbänke, die ebenfalls die Ausgestaltungen und die Funktionen der nachfolgend beschriebenen Fahrzeugsitze 101, 102, 103 aufweisen beziehungsweise ausführen können.

Die nachfolgenden Erläuterungen zu den Fahrzeugsitzen 101, 102, 103 anhand der Figuren sind somit analog auf eine ungeteilte Sitzbank insgesamt oder auf eine aus mehreren Fahrzeugsitzen bestehende mehrteilige Sitzbank übertragbar.

Die Fahrzeugsitze 101, 102, 103 umfassen ein Sitzteil 112 und ein Rückenlehnenteil 114.

Die Rückenlehnenteilstruktur des Rückenlehnenteiles 114 ist über mindestens eine Schwinge 116 mit der Sitzteilstruktur des Sitzteiles 112 verbunden.

Die mindestens eine Schwinge 116 ist einerseits schwenkbar über eine Schwingen-Schwenkachse y116 an der Rückenlehnenteilstruktur des Rückenlehnenteiles 114 angeordnet.

Die mindestens eine Schwinge 116 ist andererseits fest mit der Sitzteilstruktur des Sitzteiles 112 verbunden. Durch die Zwangskopplung des Rückenlehnenteiles 114 mit dem Sitzteil 112 über die Schwinge 116 bewegt sich das Sitzteil 112 bei einer Verstellbewegung des Rückenlehnenteiles 114 stets mit.

Die Fahrzeugsitze 101, 102, 103 weisen ein Koppelelement 10 auf. Das Koppelelement 10 ist mit einer Rückenlehnenentriegelungseinheit 300 fest verbunden oder die Rückenlehnenentriegelungseinheit 300 ist Teil des Koppelelementes 10.

Die Rückenlehnenentriegelungseinheit 300 weist beispielsweise ein erstes Beschlagteil auf, das mit der Rückenlehnenteilstruktur in Verbindung steht. Die Rückenlehnenentriegelungseinheit 300 weist ein zweites Beschlagteil auf, welches mit dem Koppelelement 10 in Verbindung steht oder Teil des Koppelelementes 10 ist. Das Koppelelement 10 weist keine direkte Verbindung zum Sitzteil 112 auf. Durch Betätigung eines nicht näher dargestellten Verstellgliedes der Rückenlehnenentriegelungseinheit 300 wird das Rückenlehnenteil 114 je nach Schwenkbewegung des Verstellgliedes der Rückenlehnenentriegelungseinheit 300 zur Neigungsverstellung des Rückenlehnenteiles 114 gegenüber dem Sitzteil 112 um die Lehnenschwenkachse y114 schwenkbeweglich nach vorne und nach hinten bewegt.

Durch eine Entriegelung der Rückenlehnenentriegelungseinheit 300 ist das Rückenlehnenteil 114 gegenüber dem Sitzteil 112 respektive der Schwinge 116 schwenkbar.

Bei der vorliegenden Erfindung wird die Verschwenkung des Rückenlehnenteiles 114 gegenüber dem Sitzteil 112 zur Realisierung der Easy-Entry-Funktion nicht benötigt, wie nachfolgend noch erläutert wird. Darin wird ein Vorteil gesehen. Die Rückenlehnenentriegelungseinheit 300 wird gegenüber den Lösungen, bei denen die Verschwenkung des Rückenlehnenteiles 114 über die Rückenlehnenentriegelungseinheit 300 Teil des Easy-Entry-Funktion ist (siehe beispielsweise die Druckschrift DE 10 2013 012 284 A1), gemäß der vorliegenden Erfindung nicht benötigt, wodurch die Rückenlehnenentriegelungseinheit 300 vereinfacht ausgeführt werden kann.

Das Sitzteil 112 weist auf seiner vorderen Seite, die dem Rückenlehnenteil 114 in der normalen Gebrauchsposition des Fahrzeugsitzes 101, 102, 103 gegenüberliegt, mindestens einen Schwenkarm 118 auf, der an einem Ende sitzteilseitig an der Sitzteilstruktur des Sitzteiles 112 über eine obere Schwenkarm-Schwenkachse y118a schwenkbar angeordnet ist.

Am anderen Ende ist der Schwenkarm 118 direkt oder indirekt schwenkbar entweder (erste und zweite Ausführungsform) über eine untere Schwenkarm-Schwenkachse y118b an einer Oberschiene 201 einer Sitzschiene 200 oder über die untere Schwenkarm-Schwenkachse y118b an einer mit der Oberschiene 201 der Sitzschiene 200 fest in Verbindung stehenden Verschiebevorrichtung 400; 400-3 (dritte Ausführungsform) angeordnet, wobei die Sitzschiene 200 eine karosseriefeste Unterschiene 202 umfasst. Das andere Ende des Schwenkarms 118 kann dabei in geeigneter Weise mit der Oberschiene 201 verbunden und kann in oder auf oder neben der Oberschiene 201 der Sitzschiene 200 angeordnet sein.

Bei den dargestellten ersten beiden Ausführungsformen ist der Schwenkarm 118 indirekt mit der Oberschiene 201 über ein vorderes Fußteil 119 verbunden. Mit anderen Worten, die Verbindung wird über ein mit der Oberschiene 201 fest verbundenes und gegenüber der Oberschiene 201 unverschwenkbares vorderes Fußteil 119 hergestellt.

Es wird explizit darauf hingewiesen, dass die Anordnung des vorderen Fußteiles 119 nicht zwingend notwendig ist. Wesentlich ist die Anbindung der Sitzteilstruktur des Sitzteiles 112 mittels des Schwenkarmes 118 über die obere und untere Schwenkarm-Schwenkachse y118a, y118b. Eine solche Anbindung ist in der dritten Ausführungsform realisiert. Hier ist der Schwenkarm 118 wie zuvor erläutert mit der Oberschiene 201 der Sitzschiene 200 über die mit der Oberschiene 201 der Sitzschiene 200 fest in Verbindung stehende Verschiebevorrichtung 400; 400-3 drehbeweglich verbunden.

Die Fahrzeugsitze 101, 102, 103 sind auf mindestens einer Sitzschiene 200, zumeist jedoch aus einem aus zwei Sitzschienen 200 bestehenden Sitzschienenpaar längsverschieblich in +/-x-Richtung angeordnet.

Die Oberschiene 201 ist gegenüber der Unterschiene 202 längsverschieblich angeordnet, wobei die Unterschiene 202 fest direkt an der Karosserie K oder indirekt an der Karosserie K angeordnet ist.

Auf der Oberschiene 201 ist eine Verschiebevorrichtung 400 angeordnet. Die Verschiebevorrichtung erlaubt eine Verschiebung der Fahrzeugsitze 101, 102, 103 gegenüber der Oberschiene 201 der Sitzschiene.

Mit der Verschiebevorrichtung 400 ist das bereits erwähnte Koppelelement 10 schwenkbar über eine Koppelelement-Schwenkachse y10a verbunden.

In der ersten und zweiten Ausführungsformen steht das Koppelelement 10 über ein hinteres Fußteil 121 mit der Verschiebevorrichtung 400 in Verbindung, so dass die Koppelelement-Schwenkachse y10a in dem hinteren Fußteil 121 liegt. Es wird explizit darauf hingewiesen, dass die Anordnung des hinteren Fußteiles 121 nicht zwingend notwendig ist. Eine solche Anordnung ist in der dritten Ausführungsform realisiert. Dort steht das Koppelelement 10 nicht über ein hinteres Fußteil 121 mit der Verschiebevorrichtung 400; 400-3 in Verbindung, sondern es ist mit der Verschiebevorrichtung 400; 400-3 direkt verbunden.

Wesentlich ist die schwenkbare Anbindung des Koppelelementes 10 an der Verschiebevorrichtung 400, die wie in den ersten beiden Ausführungsformen dargestellt indirekt über das hintere Fußteil 121 oder wie in der dritten Ausführungsform dargestellt ist direkt durch eine schwenkbare Anbindung des Koppelelementes 10 an der Verschiebevorrichtung 400 erfolgt.

Nachfolgend wird weiter noch detaillierter auf die Gemeinsamkeiten und Unterschiede hinsichtlich des Aufbaus der Fahrzeugsitze 101, 102, 103 gemäß den drei Ausführungsformen eingegangen.

Erste Ausführungsform:
Das Koppelelement 10 weist in der ersten Ausführungsform eine Kulissenanbindung über eine zweite Koppelelement-Schwenkachse y10b auf, wobei in der dargestellten ersten Ausführungsform eine Kulisse 115 in dem vorderen Fußteil 119 realisiert ist, über die das Koppelelement 10 über ein in die Kulisse 115 eingreifendes Kulissenelement (nicht dargestellt) gegenüber der Oberschiene 201 um die zweite Koppelelement-Schwenkachse y10b verschwenkbar und innerhalb der Kulisse 115 gegenüber der Oberschiene 201 verlagerbar ist.
Das Kulissenelement, beispielsweise ein Bolzen (ohne Bezugszeichen) oder dergleichen, liegt im Zusammenbauzustand in y-Richtung auf der zweiten Koppelelement-Schwenkachse y10b.

Es versteht sich gemäß den vorherigen Ausführungen, dass die Kulissenanbindung - aus Kulisse 115 und Kulissenelement (ohne Bezugszeichen) - integraler Bestandteil der Oberschiene 201 sein kann, wenn auf die Anordnung eines vorderen Fußteiles 119, wie in der dargestellten ersten Ausführungsform ausgeführt, verzichtet wird.

Die Kulissenanbindung hat einerseits die Funktion, das Koppelelement 10 zu führen, sobald eine Entriegelung der Verschiebevorrichtung 400 gegenüber der Oberschiene 201 erfolgt. Die Verschiebevorrichtung 400 gemäß der ersten Ausführungsform ist als Verschiebe-Gleitvorrichtung 400-1 ausgebildet, deren Funktion in der zugehörigen Funktionsbeschreibung noch erläutert wird.

Über die Kulissenanbindung werden andererseits Kräfte, insbesondere Crashkräfte, die in die Struktur des Fahrzeugsitzes 101 eingeleitet werden, in die karosserieseitige Struktur des Fahrzeuges übertragen. Somit werden die insbesondere in Fahrzeuglängsrichtung wirkenden Kräfte über die Kulissenanbindung in verbesserter Weise in die karosserieseitige Struktur des Fahrzeuges eingeleitet. Das Koppelelement 10 überträgt in den Fahrzeugsitz 101 eingeleitete Kräfte, die aus der Struktur des Fahrzeugsitzes 101 auf das Koppelelement 10 übertragen werden im Ausführungsbeispiel der ersten Ausführungsform erstens über die Kulissenanbindung und zweitens über den hintere Fuß 121 auf die Verschiebe-Gleitvorrichtung 400-1 und schließlich auf die Sitzschiene 200 und damit über die Ober- und Unterschiene 201, 202 auf die karosserieseitige Struktur des Fahrzeuges.

Durch die Anbindung des Koppelelementes 10 an den vorderen Fuß 119 über die Kulissenanbindung erfolgt zusammengefasst eine statische Stabilisierung der Anbindung des Fahrzeugsitzes 101 an der Oberschiene 201 der Sitzschiene 200 und eine Erhöhung der vom Fahrzeugsitz 101 aufnehmbaren Kräfte sowie eine Zwangsführung des Koppelelementes 10 und damit des Fahrzeugsitzes 101 während der reversiblen Easy-Entry-Bewegung.

Zweite Ausführungsform:
Das Koppelelement 10 weist in der zweiten Ausführungsform eine Gelenkanbindung und keine Kulissenanbindung auf. Im Unterschied zu der ersten Ausführungsform ist an dem Koppelelement 10 über die zweite Koppelelement-Schwenkachse y10b ein Hebelgelenk 125 angeordnet. Ein Verbindungsglied, beispielsweise ein Bolzen oder dergleichen, liegt im Zusammenbauzustand in y-Richtung auf der zweiten Koppelelement-Schwenkachse y10b und durchgreift das Koppelelement 10 und das koppelelementseitige Ende des Hebelgelenks 125.
Das Hebelgelenk 125 ist über sein dem Koppelelement 10 gegenüberliegenden Ende ebenfalls schwenkbeweglich über eine Hebelgelenk-Schwenkachse y125 an der Oberschiene 201 befestigt.

Das Hebelgelenk 125 hat einerseits die Funktion, das Koppelelement 10 zu führen, sobald eine Entriegelung der Verschiebevorrichtung 400 gegenüber der Oberschiene 201 erfolgt. Die Verschiebevorrichtung 400 gemäß der zweiten Ausführungsform ist ebenfalls als Verschiebe-Gleitvorrichtung 400-2 ausgebildet, deren Funktion analog zu der ersten Ausführungsform in der zugehörigen Funktionsbeschreibung noch erläutert wird.

Das Hebelgelenk 125 hat andererseits die Funktion Kräfte, insbesondere Crashkräfte, die in die Struktur des Fahrzeugsitzes 102 eingeleitet werden, über das Koppelelement 10 über die Oberschiene 201 in die karosserieseitige Struktur des Fahrzeuges zu übertragen. Somit werden die insbesondere in Fahrzeuglängsrichtung wirkenden Kräfte in verbesserter Weise eingeleitet. Das Koppelelement 10 überträgt Kräfte, insbesondere Crashkräfte, die aus der Struktur des Fahrzeugsitzes 102 auf das Koppelelement 10 übertragen werden, erstens auf das Hebelgelenk 125 und somit auf die Oberschiene 201 der Sitzschiene 200 und zweitens über den hinteren Fuß 121 und die Gleitvorrichtung 400-1 auf die Oberschiene 201 und damit ebenfalls auf die Unterschiene 202 der Sitzschiene 200, wodurch in vorteilhafter Weise im Wesentlichen horizontal (x-Richtung) wirkende und im Wesentlichen vertikal wirkende Kräfte vektoriell in die karosserieseitige Struktur des Fahrzeuges eingeleitet werden.

Durch die Anbindung über das Hebelgelenk 125 erfolgt eine statische Stabilisierung der Anbindung des Fahrzeugsitzes 102 an der Sitzschiene 200 und eine Erhöhung der vom Fahrzeugsitz 102 aufnehmbaren Kräfte, sowie eine Zwangsführung des Koppelelementes 10 und damit des Fahrzeugsitzes 102 während der reversiblen Easy-Entry-Bewegung.

Ein Prototyp des Fahrzeugsitzes 102 gemäß der zweiten Ausführungsform ist mit gleichen Bezugszeichen in den Figuren 2D und 2E in einer perspektivischen Darstellung und in einer Seitenansicht dargestellt.

Dritte Ausführungsform:
Das Koppelelement 10 weist analog zu der zweiten Ausführungsform in der dritten Ausführungsform eine Gelenkanbindung und keine Kulissenanbindung auf. Im Unterschied zu der ersten Ausführungsform ist an dem Koppelelement 10 wie bei der zweiten Ausführungsform über die zweite Koppelelement-Schwenkachse y10b ein Hebelgelenk 125 angeordnet.

Ein Verbindungsglied, beispielsweise ein Bolzen (ohne Bezugszeichen) oder dergleichen, liegt im Zusammenbauzustand in y-Richtung auf der zweiten Koppelelement-Schwenkachse y10b und durchgreift das Koppelelement 10 und das koppelelementseitige Ende des Hebelgelenks 125. Das Hebelgelenk 125 ist über sein dem Koppelelement 10 gegenüberliegenden Ende anders als in der zweiten Ausführungsform schwenkbeweglich über eine Hebelgelenk-Schwenkachse y125 nicht an der Oberschiene 201 direkt, sondern an einer Verschiebe-Kulissenvorrichtung 400-3 befestigt, die fest mit der Oberschiene 201 verbunden ist. Die Verschiebe-Kulissenvorrichtung 400-3 umfasst eine sich in x-Richtung erstreckende Kulisse 400-31, deren Funktion in der zugehörigen Funktionsbeschreibung noch erläutert wird.

Das Hebelgelenk 125 hat einerseits die Funktion, das Koppelelement 10 zu führen, sobald eine Entriegelung des Koppelelementes 10 gegenüber der Oberschiene 201 erfolgt, wie noch erläutert wird.

Das Koppelelement 10 weist eine Ausnehmung 10-1 auf, die in einer Ausgangsposition I des Fahrzeugsitzes 103 zur Positionierung des Koppelelementes 10 an der Oberschiene 201 dient.

Die Oberschiene 201 umfasst ein Positionierelement 201-1, welches in der Ausgangsposition I des Fahrzeugsitzes 103 in die Ausnehmung 10-1 des Koppelelementes 10 eingreift.

Das Koppelelement 10 umfasst ferner ein Kulissenelement (ohne Bezugszeichen), beispielsweise ein Bolzen oder dergleichen, der sich im Zusammenbauzustand in y-Richtung auf der ersten Koppelelement-Schwenkachse y10a erstreckt. Das Kulissenelement durchgreift im Zusammenbauzustand das Koppelelement 10 und die Kulisse 400-31 in der Verschiebe-Kulissenvorrichtung 400-3.

Das Hebelgelenk 125 hat andererseits die Funktion, Kräfte, insbesondere Crashkräfte, die in die Struktur des Fahrzeugsitzes 102 eingeleitet werden, über das Koppelelement 10 und die Verschiebe-Kulissenvorrichtung 400-3 auf die Oberschiene 201 und von dort über die Unterschiene 202 in die karosserieseitige Struktur des Fahrzeuges zu übertragen. Somit werden die insbesondere in Fahrzeuglängsrichtung wirkenden Kräfte in verbesserter Weise eingeleitet. Das Koppelelement 10 überträgt Kräfte, insbesondere Crashkräfte, die aus der Struktur des Fahrzeugsitzes 102 auf das Koppelelement 10 übertragen werden, erstens auf das Hebelgelenk 125 und dann über die Verschiebe-Kulissenvorrichtung 400-3 auf die Oberschiene 201 der Sitzschiene 200 und zweitens über die Kulissenanbindung - aus Kulisse 400-31 und Kulissenelement (ohne Bezugszeichen) - des Koppelelementes 10 über die Kulisse 400-31 der Verschiebe-Kulissenvorrichtung 400-3 auf die Oberschiene 201 der Sitzschiene 200 und somit auf die Unterschiene 202 der Sitzschiene 200, wodurch in vorteilhafter Weise im Wesentlichen horizontal (x-Richtung) wirkende und im Wesentlichen vertikal wirkende Kräfte vektoriell in die karosserieseitige Struktur des Fahrzeuges eingeleitet werden.

Durch die Anbindung des Hebelgelenks 125 zwischen Koppelelement 10 und Verschiebe-Kulissenvorrichtung 400-3 erfolgt eine statische Stabilisierung der Anbindung des Fahrzeugsitzes 103 an der Sitzschiene 200 und eine Erhöhung der vom Fahrzeugsitz 103 aufnehmbaren Kräfte sowie eine Zwangsführung des Koppelelementes 10 und damit des Fahrzeugsitzes 103 während der reversiblen Easy-Entry-Bewegung.

Die Easy-Entry-Funktion gemäß der ersten Ausführungsform:
Erster Schritt: Verstellung des Fahrzeugsitzes 101 ausgehend von Figur 1A zu Figur 1B:
Der Fahrzeugsitz 101 ist in Figur 1A in einer Ausgangsposition I und in Figur 1B in der Zwischenposition II angeordnet.

Zunächst wird ausgehend von der Ausgangsposition I durch die Betätigung eines Entriegelungselementes die Entriegelung der Verschiebe-Gleitvorrichtung 400, 400-1 gegenüber der Oberschiene 201 bewirkt.

Die Verschiebe-Gleitvorrichtung 400, 400-1 wird gegenüber der Oberschiene 201 in einem ersten Verstellweg um ein vorgebbares erstes horizontales Längenmaß Δ×1 in +x-Richtung gemäß dem Pfeil P1 in Figur 1B nach vorne verlagert, so dass der Fahrzeugsitz 101 (Rückenlehnenteil 114 und Sitzteil 112 gemeinsam) nach Erreichen eines nicht näher dargestellten Endanschlages gemäß Figur 1B eine Zwischenposition II erreicht. Als Endanschlag kann/können das vom Koppelelement 10 abgewandte Ende der Kulisse 115 und/oder ein Anschlag der Verschiebe-Gleitvorrichtung 400, 400-1 gegenüber der Oberschiene 201 ausgebildet sein.

Das Rückenlehnenteil 114 steht über das gegenüber der Verschiebe-Gleitvorrichtung 400, 400-1 um die erste Koppelelement-Schwenkachse y10a verschwenkbare Koppelelement 10 starr mit der Rückenlehnenentriegelungseinheit 300 des Rückenlehnenteiles 114 in Verbindung, wodurch das Rückenlehnenteil 114 um einen ersten vorgebbaren horizontalen Rückenlehnenteil-Verstellweg Δ×1a in Längsrichtung +x verschoben und gleichzeitig die Neigung des Rückenlehnenteiles 114 von seiner Ausgangsposition I um einen vorgebbaren Winkel α in die Zwischenposition II verstellt wird, wobei das sich auf einem Schwenkarm 118 auf der Oberschiene 201 der Sitzschiene 200 direkt abstützende zwangsgekoppelte Sitzteil 112 in dem ersten Schritt um einen ersten horizontalen Sitzteil-Verstellweg Δ×1b in Längsrichtung +x verschoben und eine Vorderseite des Sitzteiles 112 gleichzeitig um einen vertikalen Verstellweg Δz abgesenkt wird.

In diesem ersten Schritt wird somit eine erste Schubbewegung des Fahrzeugsitzes 101 nach vorn bewirkt.

Durch die erste Schubbewegung des Fahrzeugsitzes 101 und die Zwangsführung des Koppelelementes 10 über das Kulissenelement in der Kulisse 115 erfolgt ebenfalls eine Schwenkbewegung des Rückenlehnenteiles 114 um die erste Koppelelement-Schwenkachse y10a, wie der Pfeil P2 in Figur 1B verdeutlicht.

Es wird somit bereits im ersten Schritt eine Schub-Schwenkbewegung des Rückenlehnenteiles 114 und des Sitzteiles 112 bewirkt. Mit anderen Worten, eine Schubbewegung und eine Schwenkbewegung des Rückenlehnenteiles 114 und des Sitzteiles 112 findet gleichzeitig statt. Man spricht auch von einer überlagerten Schub-Schwenkbewegung des Rückenlehnenteiles 114 und des Sitzteiles 112.

Im ersten Schritt taucht das Sitzteil 112 bedingt durch seinen kinematischen Aufbau und seine Anbindung an dem Rückenlehnenteil 114 über die Schwinge 116 und an der Oberschiene 201 über den Schwenkarm 118 und das vordere Fußteil 119 gemäß dem Pfeil P3 in Figur 1B mit seiner Vorderkante in -z-Richtung nach unten ab.

In dem ersten Schritt kommt es somit zur Verschwenkung des Rückenlehnenteiles 114 um die erste Koppelelement-Schwenkachse y10a und gleichzeitig zur Verlagerung des Rückenlehnenteiles 114 um den ersten horizontalen Rückenlehnenteil-Verstellweg Δ×1a nach vorn in +x-Richtung, wobei das Sitzteil 112 durch die zwischen der Rückenlehnenteilstruktur und der Sitzteilstruktur angeordnete Schwinge 116 in +x-Richtung um den ersten horizontalen Sitzteil-Verstellweg Δ×1b mitgenommen wird und mit seiner Vorderkante in -z-Richtung nach unten in einem vorgebbaren Verstellweg um ein vorgebbares vertikales Längenmaß Δz abtaucht.

Der Schwenkarm 118 wird dabei um die Schwenkarm-Schwenkachsen y118a und y118b aus der im Wesentlichen vertikalen Position gemäß Figur 1A in die im Wesentlichen horizontale Position gemäß Figur 1B geschwenkt ist.

In dem ersten Schritt erfolgt bei der Verschwenkung des Rückenlehnenteiles 114 um die erste Koppelelement-Schwenkachse y10a nach vorn eine kulissengesteuerte zwangsweise Mitnahme des Sitzteiles 112 durch die Zwangskopplung des Sitzteiles 112 an dem Rückenlehnenteil 114 über die Schwinge 116.

Das Rückenlehnenteil 114 wird, wie in Figur 1B dargestellt ist, von seiner Ausgangsposition 114; I in +x-Richtung um den ersten horizontalen Rückenlehnenteil-Verstellweg Δ×1a nach vorne und gleichzeitig um die erste Koppelelement-Schwenkachse y10b nach vorne um einen vorgebbaren Schwenkwinkel α in die Zwischenposition 114; II verschwenkt.

Es versteht sich, dass in Abhängigkeit der Schwingenform der Schwinge 116 und/oder der Ausrichtung der Kulisse 115 gegenüber einer gedachten Horizontalen und/oder in Abhängigkeit der Länge des vorgebbaren ersten horizontalen Längenmaßes Δ×1 unterschiedliche Schwenkwinkel α des Rückenlehnenteiles 114 gegenüber der Ausgangsposition 114; I beziehungsweise unterschiedlich lange Verstellbewegungen Δ×1a des Rückenlehnenteiles 114 in +x-Richtung realisierbar sind.

Nach der Durchführung des ersten Schrittes ist bereits im Schulterbereich und im Fußbereich hinter dem Fahrzeugsitz 101 ein erster Freiraum geschaffen, der in einem entsprechenden Türausschnitt eines Fahrzeuges bereits das Durchreichen von Gegenständen in den Innenraum oder aus dem Innenraum des Fahrzeuges oder sogar das Ein- und Aussteigen von Personen erlaubt.

Zweiter Schritt: Verstellung des Fahrzeugsitzes 101 ausgehend von Figur 1B zu Figur 1C:
In dem zweiten Schritt wird dafür gesorgt, dass die Oberschiene 201 gegenüber der Unterschiene 202 entriegelt ist. Die Entriegelung erfolgt über eine nur in Figur 2D dargestellte Sitzschienenentriegelungseinheit 500.

In dem zweiten Schritt bewegt sich der gesamte Fahrzeugsitz 101 noch weiter um einen vorgebbaren zweiten Verstellweg um ein vorgebbares zweites horizontales Längenmaß Δ×2 weiter nach vorne in +x-Richtung, wodurch der erste Freiraum noch vergrößert wird und ein zweiter vergrößerter Freiraum im Schulterbereich und im Fußbereich hinter dem Fahrzeugsitz 101 geschaffen wird. Von Vorteil ist insbesondere, dass das Koppelelement 10 in dem ersten Schritt über die erste Koppelelement-Schwenkachse y10a bereits verschwenkt worden ist, wodurch der zweite Freiraum auch nach dem zweiten Schritt, bei dem das Koppelelement 10 mit um das vorgebbare horizontale Längenmaß Δ×2 nach vorn verlagert wird, insbesondere im Fußbereich störungsfrei zum Ein- und Ausstieg von Personen zur Verfügung steht, wodurch der zweite Freiraum auch nach Durchführung des zweiten Schrittes, insbesondere im Fußbereich störungsfrei zum Ein- und Ausstieg von Personen zur Verfügung steht.

Der zweite Schritt stellt somit eine zweite Schubbewegung des Fahrzeugsitzes 101 in +x-Richtung um das vorgebbare horizontale Längenmaß Δ×2 in die Endposition III, die sogenannte Easy-Entry-Position dar, wobei das zweite vorgebbare Längenmaß Δ×2 durch die in +x-Richtung vorgegebene Bewegung der Oberschiene 201 gegenüber der Unterschiene 202 bestimmt wird, wie die Figur 1C verdeutlicht.

Bei diesem zweiten Schritt taucht die Vorderseite des Sitzteiles 112 nicht weiter in z-Richtung ab, da die Bewegung des Fahrzeugsitzes 101 in dem zweiten Schritt nur noch in +x-Richtung erfolgt, das heißt, eine weitere Schwenkbewegung um die erste Koppelelement-Schwenkachse y10a des Koppelelementes 10 findet in dem zweiten Schritt nicht statt.

Die Easy-Entry-Funktion gemäß der zweiten Ausführungsform:
Erster Schritt: Verstellung des Fahrzeugsitzes 102 ausgehend von Figur 2A zu Figur 2B:
Der Fahrzeugsitz 102 ist in Figur 2A in einer Ausgangsposition I angeordnet.

Zunächst wird ausgehend von der Ausgangsposition I durch die Betätigung eines nicht näher dargestellten Entriegelungselementes die Entriegelung der Verschiebe-Gleitvorrichtung 400, 400-2 gegenüber der Oberschiene 201 bewirkt.

Die Verschiebe-Gleitvorrichtung 400, 400-2 wird gegenüber der Oberschiene 201 um das vorgebbare erste horizontale Längenmaß Δ×1 in +x-Richtung gemäß dem Pfeil P1 in Figur 2B nach vorne verlagert, so dass der Fahrzeugsitz 102 nach Erreichen eines Endanschlages gemäß Figur 2B seine Zwischenposition II erreicht. Als Endanschlag kann ein Anschlag der Verschiebe-Gleitvorrichtung 400, 400-2 gegenüber der Oberschiene 201 ausgebildet sein.

Das Rückenlehnenteil 114 steht auch bei der zweiten Ausführungsform über das gegenüber der Verschiebe-Gleitvorrichtung 400, 400-2 um die erste Koppelelement-Schwenkachse y10a verschwenkbare Koppelelement 10 starr mit der Rückenlehnenentriegelungseinheit 300 des Rückenlehnenteiles 114 in Verbindung, wodurch das Rückenlehnenteil 114 ebenfalls um einen ersten vorgebbaren horizontalen Rückenlehnenteil-Verstellweg Δ×1a in Längsrichtung +x verschoben und gleichzeitig die Neigung des Rückenlehnenteiles 114 von seiner Ausgangsposition I um einen vorgebbaren Winkel α in seine Zwischenposition II verstellt wird, wobei das sich auf dem Schwenkarm 118 auf der Oberschiene 201 der Sitzschiene 200 direkt abstützende zwangsgekoppelte Sitzteil 112 in dem ersten Schritt um einen ersten horizontalen Sitzteil-Verstellweg Δ×1b in Längsrichtung +x verschoben und eine Vorderseite des Sitzteiles 112 gleichzeitig um einen vertikalen Verstellweg Δz abgesenkt wird.

In diesem ersten Schritt wird somit ebenfalls eine erste Schubbewegung des Fahrzeugsitzes 102 nach vorn bewirkt.

Durch die erste Schubbewegung des Fahrzeugsitzes 102 um Δ×1 der Verschiebe-Gleitvorrichtung 400, 400-2 gegenüber der Oberschiene 201 und die Zwangsführung des Koppelelementes 10 über das Hebelgelenk 125 erfolgt analog zu der ersten Ausführungsform eine Schwenkbewegung des Rückenlehnenteiles 114 um die erste Koppelelement-Schwenkachse y10a, wie der Pfeil P2 in Figur 2B verdeutlicht.

Es wird analog zu der ersten Ausführungsform eine Schub-Schwenkbewegung des Rückenlehnenteiles 114 und des Sitzteiles 112 bewirkt. Mit anderen Worten, es findet auch in der zweiten Ausführungsform des Fahrzeugsitzes 102 eine Schubbewegung und eine Schwenkbewegung des Rückenlehnenteiles 114 und des Sitzteiles 112 gleichzeitig statt.

Dabei taucht das Sitzteil 112 auch in der zweiten Ausführungsform gemäß dem Pfeil P3 in Figur 2B mit seiner Vorderkante in -z-Richtung nach unten ab. In dem ersten Schritt kommt es somit zur Verschwenkung des Rückenlehnenteiles 114 um die erste Koppelelement-Schwenkachse y10a und gleichzeitig zur Verlagerung des Rückenlehnenteiles 114 um den ersten horizontalen Rückenlehnenteil-Verstellweg Δ×1a nach vorn in +x-Richtung, wobei das Sitzteil 112 durch die zwischen der Rückenlehnenteilstruktur und der Sitzteilstruktur angeordnete Schwinge 116 in +x-Richtung um den ersten horizontalen Sitzteil-Verstellweg Δ×1b mitgenommen wird und dabei mit seiner Vorderkante in -z-Richtung nach unten um ein vorgebbares vertikales Längenmaß Δz abtaucht.

Der Schwenkarm 118 wird dabei um die Schwenkarm-Schwenkachsen y118a und y118b aus der im Wesentlichen vertikalen Position gemäß Figur 1A in die im Wesentlichen horizontale Position gemäß Figur 2B geschwenkt.

In dem ersten Schritt erfolgt bei der Verschwenkung des Rückenlehnenteiles 114 über die erste Koppelelement-Schwenkachse y10a nach vorn eine vom Gelenkhebel 125 gesteuerte zwangsweise Mitnahme des Sitzteiles 112 durch die Zwangskopplung des Sitzteiles 112 an dem Rückenlehnenteil 114 über die Schwinge 116.

Das Rückenlehnenteil 114 wird, wie in Figur 2B dargestellt ist, gegenüber seiner Ausgangsposition 114; I nach vorne in +x-Richtung um den ersten horizontalen Rückenlehnenteil-Verstellweg Δ×1a und gleichzeitig um die erste Koppelelement-Schwenkachse y10b nach vorne um einen vorgebbaren Schwenkwinkel α in seine Zwischenposition 114; II verschwenkt.

Es versteht sich, dass in Abhängigkeit der Schwingenform der Schwinge 116 und/oder der Ausgestaltung des Hebelgelenks 125 (Form des Hebelgelenks 125 und/oder Länge des Hebelgelenks 125, Ort der Anbindung des Hebelgelenks 125 an dem Koppelelement 10 und/oder Ort der Anbindung des Hebelgelenks 125 an der Oberschiene 201) gegenüber einer gedachten Horizontalen und/oder in Abhängigkeit der Länge des vorgebbaren ersten horizontalen Längenmaßes Δ×1 unterschiedliche Schwenkwinkel α des Rückenlehnenteiles 114 gegenüber der gedachten Vertikalen beziehungsweise unterschiedlich lange Verstellbewegungen des Rückenlehnenteiles 114 um den ersten horizontalen Rückenlehnenteil-Verstellweg Δ×1a und des Sitzteiles 112 um den ersten horizontalen Sitzteil-Verstellweg Δ×1b in +x-Richtung vorgebbar sind.

Nach der Durchführung des ersten Schrittes ist analog zu der ersten Ausführungsform bereits im Schulterbereich und im Fußbereich hinter dem Fahrzeugsitz 102 ein erster Freiraum geschaffen, der in einem entsprechenden Türausschnitt eines Fahrzeuges bereits das Durchreichen von Gegenständen in den Innenraum des Fahrzeuges oder aus dem Innenraum des Fahrzeuges oder sogar das Ein- und Aussteigen von Personen erlaubt.

Zweiter Schritt: Verstellung des Fahrzeugsitzes 102 ausgehend von Figur 2B zu Figur 2C:
In dem zweiten Schritt wird dafür gesorgt, dass die Oberschiene 201 gegenüber der Unterschiene 202 entriegelt ist. Die Entriegelung erfolgt über eine nicht näher dargestellte Sitzschienenentriegelungseinheit.

In dem zweiten Schritt bewegt sich der gesamte Fahrzeugsitz 102 noch weiter um ein vorgebbares zweites horizontales Längenmaß Δ×2 nach vorne in +x-Richtung, wodurch der erste Freiraum noch vergrößert wird und ein zweiter vergrößerter Freiraum im Schulterbereich und im Fußbereich hinter dem Fahrzeugsitz 101 geschaffen wird. Von Vorteil ist, dass das Koppelelement 10 bereits in dem ersten Schritt über die erste Koppelelement-Schwenkachse y10a verschwenkt worden ist, wodurch der zweite Freiraum auch nach dem zweiten Schritt, bei dem das Koppelelement mit um das zweite vorgebbare horizontale Längenmaß Δ×2 nach vorn verlagert wird, insbesondere im Fußbereich störungsfrei zum Ein- und Ausstieg von Personen zur Verfügung steht.

Der zweite Schritt stellt somit eine zweite Schubbewegung des Fahrzeugsitzes 101 in +x-Richtung um das zweite vorgebbare horizontale Längenmaß Δ×2 in die Endposition III, die sogenannte Easy-Entry-Position dar, wobei das zweite vorgebbare horizontale Längenmaß Δ×2 durch die in +x-Richtung vorgegebene Bewegung der Oberschiene 201 gegenüber der Unterschiene 202 bestimmt wird, wie die Figur 2C verdeutlicht.

Bei diesem zweiten Schritt taucht die Vorderseite des Sitzteiles 112 nicht weiter in z-Richtung ab, da die Bewegung des Fahrzeugsitzes 101 in dem zweiten Schritt nur noch in +x-Richtung erfolgt, das heißt, eine weitere Schwenkbewegung um die erste Koppelelement-Schwenkachse y10a des Koppelelementes 10 findet in dem zweiten Schritt nicht statt.

Durch die Beschreibung wird deutlich, dass die Neigung des Rückenlehnenteiles 114 innerhalb der Easy-Entry-Bewegung nicht über die Rückenlehnenentriegelungseinheit 300 erfolgt, sondern über das Koppelelement 10 und die Kulissenanbindung (erste Ausführungsform) oder die Gelenkanbindung (zweite Ausführungsform) realisiert wird. Durch die Anordnung und kinematische Anbindung des Koppelelementes 10 wird gegenüber dem Stand der Technik eine zusätzliche Fußeinstiegsfreiheit gewonnen.

Die Easy-Entry-Funktion gemäß der dritten Ausführungsform:
Erster Schritt: Verstellung des Fahrzeugsitzes 103 ausgehend von Figur 3A zu Figur 3B:
Der Fahrzeugsitz 103 ist in Figur 3A in einer Ausgangsposition I angeordnet.

Zunächst wird ausgehend von der Ausgangsposition I durch die Betätigung eines nicht näher dargestellten Entriegelungselementes die Entriegelung des Fahrzeugsitzes 103 gegenüber der Verschiebe-Kulissenvorrichtung 400, 400-3 bewirkt. Die Ausnehmung 10-1 des Koppelelementes 10, in der in der Ausgangsposition I des Fahrzeugsitzes 103 das Positionierelement 201-1 einliegt, kann nach der Entriegelung durch Verschwenken des Fahrzeugsitzes 103 aus der Ausnehmung 10-1 des Koppelelementes 10 heraus geführt werden.

Das Koppelelement 10 und damit der Fahrzeugsitz 103 ist über das Kulissenelement um die erste Koppelelement-Schwenkachse y10a schwenkbar in +x-Richtung verlagerbar. Das Kulissenelement durchgreift im Zusammenbauzustand das Koppelelement 10 und die Kulisse 400-31 in der Verschiebe-Kulissenvorrichtung 400-3, so dass gleichzeitig eine reversible Verschwenkung des Koppelelementes 10 um die erste Koppelelement-Schwenkachse y10a und eine reversible Verschiebung des Koppelelementes 10 innerhalb der Kulisse 400-31 in -/+x-Richtung möglich ist.

Das um die erste Koppelelement-Schwenkachse y10a schwenkbare Koppelelement 10 wird gleichzeitig in der Kulisse 400-31 entsprechend der gewählten Länge der Kulisse 400-31 um das vorgebbare erste horizontale Längenmaß Δ×1 in +x-Richtung gemäß dem Pfeil P1 in Figur 3B nach vorne verlagert, so dass der Fahrzeugsitz 103 nach Erreichen eines kulissenseitigen Endanschlages gemäß Figur 3B seine Zwischenposition II (vergleiche Figur 3B) erreicht.

Das Rückenlehnenteil 114 steht bei der dritten Ausführungsform über das gegenüber der Verschiebe-Kulissenvorrichtung 400, 400-3 um die erste Koppelelement-Schwenkachse y10a verschwenkbare Koppelelement 10 starr mit der Rückenlehnenentriegelungseinheit 300 des Rückenlehnenteiles 114 in Verbindung, wodurch das Rückenlehnenteil 114 ebenfalls um einen ersten vorgebbaren horizontalen Rückenlehnenteil-Verstellweg Δ×1a in Längsrichtung +x verschoben und gleichzeitig die Neigung des Rückenlehnenteiles 114 von seiner Ausgangsposition I um einen vorgebbaren Winkel α in seine Zwischenposition II verstellt wird, wobei das sich auf dem Schwenkarm 118 und somit auf der Verschiebe-Kulissenvorrichtung 400-3 und damit auf der Oberschiene 201 der Sitzschiene 200 indirekt abstützende zwangsgekoppelte Sitzteil 112 in dem ersten Schritt um einen ersten horizontalen Sitzteil-Verstellweg Δ×1b in Längsrichtung +x verschoben und eine Vorderseite des Sitzteiles 112 gleichzeitig um einen vertikalen Verstellweg Δz abgesenkt wird.

In diesem ersten Schritt wird somit ebenfalls eine erste Schubbewegung des Fahrzeugsitzes 103 nach vorn bewirkt.

Durch die erste Schubbewegung des Fahrzeugsitzes 103 um Δ×1 innerhalb der Kulisse 400-31 der mit der Oberschiene 201 fest verbundenen Verschiebe-Kulissenvorrichtung 400-3 und die Zwangsführung des Koppelelementes 10 über das Hebelgelenk 125 erfolgt analog zu den anderen Ausführungsformen eine Schwenkbewegung des Rückenlehnenteiles 114 um die erste Koppelelement-Schwenkachse y10a, wie der Pfeil P2 in Figur 3B verdeutlicht.

Es wird bei dieser Ausgestaltung in der dritten Ausführungsform analog zu den beiden zuvor beschriebenen Ausführungsformen eine Schub-Schwenkbewegung des Rückenlehnenteiles 114 und des Sitzteiles 112 bewirkt. Mit anderen Worten, es findet auch in der dritten Ausführungsform des Fahrzeugsitzes 103 eine Schubbewegung und eine Schwenkbewegung des Rückenlehnenteiles 114 und des Sitzteiles 112 gleichzeitig statt.

Dabei taucht das Sitzteil 112 auch in der dritten Ausführungsform gemäß dem Pfeil P3 in Figur 3B mit seiner Vorderkante in -z-Richtung nach unten ab. In dem ersten Schritt kommt es somit zur Verschwenkung des Rückenlehnenteiles 114 um die erste Koppelelement-Schwenkachse y10a und gleichzeitig zur Verlagerung des Rückenlehnenteiles 114 um den ersten horizontalen Rückenlehnenteil-Verstellweg Δ×1a nach vorn in +x-Richtung, wobei das Sitzteil 112 durch die zwischen der Rückenlehnenteilstruktur und der Sitzteilstruktur angeordnete Schwinge 116 in +x-Richtung um den ersten horizontalen Sitzteil-Verstellweg Δ×1b mitgenommen wird und dabei mit seiner Vorderkante in -z-Richtung nach unten um ein vorgebbares vertikales Längenmaß Δz abtaucht.

Der Schwenkarm 118 wird dabei um die Schwenkarm-Schwenkachsen y118a und y118b aus der im Wesentlichen vertikalen Position gemäß Figur 3A in die im Wesentlichen horizontale Position gemäß Figur 3B geschwenkt.

In dem ersten Schritt erfolgt bei der Verschwenkung des Rückenlehnenteiles 114 über die erste Koppelelement-Schwenkachse y10a nach vorn eine vom Hebelgelenk 125 gesteuerte zwangsweise Mitnahme des Sitzteiles 112 durch die Zwangskopplung des Sitzteiles 112 an dem Rückenlehnenteil 114 über die Schwinge 116.

Das Rückenlehnenteil 114 wird, wie in Figur 3B dargestellt ist, gegenüber seiner Ausgangsposition 114; I nach vorne in +x-Richtung um den ersten horizontalen Rückenlehnenteil-Verstellweg Δ×1a und gleichzeitig um die erste Koppelelement-Schwenkachse y10b nach vorne um einen vorgebbaren Schwenkwinkel α in seine Zwischenposition 114; II verschwenkt.

Es versteht sich, dass in Abhängigkeit der Schwingenform der Schwinge 116 und/oder der Ausgestaltung des Hebelgelenks 125 (Form des Hebelgelenks 125 und/oder Länge des Hebelgelenks 125, Ort der Anbindung des Hebelgelenks 125 an dem Koppelelement 10 und/oder Ort der Anbindung des Hebelgelenks 125 an der Verschiebe-Kulissenvorrichtung 400-3) gegenüber einer gedachten Horizontalen und/oder in Abhängigkeit der Länge der Kulisse 400-31 und des damit vorgebbaren ersten horizontalen Längenmaßes Δ×1 unterschiedliche Schwenkwinkel α des Rückenlehnenteiles 114 gegenüber der gedachten Vertikalen beziehungsweise unterschiedlich lange Verstellbewegungen des Rückenlehnenteiles 114 um den ersten horizontalen Rückenlehnenteil-Verstellweg Δ×1a und des Sitzteiles 112 um den ersten horizontalen Sitzteil-Verstellweg Δ×1b in +x-Richtung vorgebbar sind.

Nach der Durchführung des ersten Schrittes ist analog zu den beiden anderen Ausführungsformen bereits im Schulterbereich und im Fußbereich hinter dem Fahrzeugsitz 102 ein erster Freiraum geschaffen, der in einem entsprechenden Türausschnitt eines Fahrzeuges bereits das Durchreichen von Gegenständen in den Innenraum des Fahrzeuges oder aus dem Innenraum des Fahrzeuges oder sogar das Ein- und Aussteigen von Personen erlaubt.

Zweiter Schritt: Verstellung des Fahrzeugsitzes 103 ausgehend von Figur 3B zu Figur 3C:
In dem zweiten Schritt wird dafür gesorgt, dass die Oberschiene 201 zusammen mit der an der Oberschiene 201 fest angeordneten Verschiebe-Kulissenvorrichtung 400, 400-3 gegenüber der Unterschiene 202 entriegelt ist. Die Entriegelung erfolgt über eine nicht näher dargestellte Sitzschienenentriegelungseinheit.

In dem zweiten Schritt bewegt sich somit durch die Verschiebung der Oberschiene 201 gegenüber der Unterschiene 202 der gesamte Fahrzeugsitz 103 noch weiter um ein vorgebbares zweites horizontales Längenmaß Δ×2 nach vorne in +x-Richtung, wodurch der erste Freiraum noch vergrößert wird und ein zweiter vergrößerter Freiraum im Schulterbereich und im Fußbereich hinter dem Fahrzeugsitz 101 geschaffen wird. Von Vorteil ist, dass das Koppelelement 10 bereits in dem ersten Schritt über die erste Koppelelement-Schwenkachse y10a verschwenkt worden ist, wodurch der in dem ersten Schritt geschaffene erste Freiraum auch nach dem zweiten Schritt, bei dem das Koppelelement 10 nicht mehr geschwenkt wird, aber mit um das zweite vorgebbare horizontale Längenmaß Δ×2 nach vorn verlagert wird, insbesondere im Fußbereich störungsfrei zum Ein- und Ausstieg von Personen zur Verfügung steht.

Der zweite Schritt stellt somit eine zweite Schubbewegung des Fahrzeugsitzes 101 in +x-Richtung um das zweite vorgebbare horizontale Längenmaß Δ×2 in die Endposition III, die so genannte Easy-Entry-Position dar, wobei das zweite vorgebbare horizontale Längenmaß Δ×2 durch die in +x-Richtung vorgegebene Bewegung der Oberschiene 201 zusammen mit der Verschiebe-Kulissenvorrichtung 400, 400-3 gegenüber der Unterschiene 202 bestimmt wird, wie die Figur 3C verdeutlicht.

Bei diesem zweiten Schritt taucht die Vorderseite des Sitzteiles 112 nicht weiter in z-Richtung ab, da die Bewegung des Fahrzeugsitzes 101 in dem zweiten Schritt nur noch in +x-Richtung erfolgt, das heißt, eine weitere Schwenkbewegung um die erste Koppelelement-Schwenkachse y10a des Koppelelementes 10 findet in dem zweiten Schritt nicht statt.

Durch die Beschreibung wird deutlich, dass die Neigung des Rückenlehnenteiles 114 innerhalb der Easy-Entry-Bewegung nicht über die Rückenlehnenentriegelungseinheit 300 erfolgt, sondern über das Koppelelement 10, und die Kulissenanbindung über die Kulisse 115 (erste Ausführungsform) oder die Gelenkanbindung über das Hebelgelenk 125 (zweite und dritte Ausführungsform) realisiert wird. Durch die Anordnung und kinematische Anbindung des Koppelelementes 10 wird gegenüber dem Stand der Technik eine zusätzliche Fußeinstiegsfreiheit gewonnen.

Die Lösungen unterscheiden sich von der Druckschrift DE 10 2013 012 284 A1. Dort erfolgt bei der Easy-Entry-Funktion die Steuerung und Wegbegrenzung des Rastbeschlages für die Neigungsverstellung des Rückenlehnenteiles über eine Kulissenführung am/im Seitenteil. Die Bewegung des Rückenlehnenteiles erfolgt vorgeschaltet zu einer Bewegung des Fahrzeugsitzes in Fahrzeuglängsrichtung. Im Unterschied dazu erfolgt bei der Easy-Entry-Funktion gemäß der vorliegenden Erfindung die Bewegung des Rückenlehnenteiles 114 durch Längsverstellung des Fahrzeugsitzes 101, 102, 103 mittels der in den Ausführungsformen beschriebenen Verschiebevorrichtung 400; 400-1, 400-2, 4003.

Dabei wird synchron über die erläuterte Kulissenanbindung über die Kulisse 115 (erste Ausführungsform) beziehungsweise die erläuterte Gelenkanbindung über das Hebelgelenk 125 (zweite und dritte Ausführungsform) eine Neigungsverstellung des Rückenlehnenteiles 114 ohne Betätigung eines Rastbeschlages bewirkt. Der Rastbeschlag des Fahrzeugsitzes 101, 102, 103 der vorliegenden Erfindung bleibt bei der Easy-Entry-Funktion gesperrt. Wie erläutert wird die Neigung des Rückenlehnenteiles 114 in allen erläuterten Ausführungsformen in vorteilhafter Weise durch einfaches Schwenken des Koppelelementes 10 um die erste Koppelelement-Schwenkachse y10a realisiert.

Gegenüber den Druckschriften DE 10 2007 036 450 B3 und DE 10 2008 050 468 B3 besteht ein Unterschied der erfindungsgemäßen Lösung insbesondere darin, dass das Koppelelement 10 nicht gemäß den drei Ausführungsformen der Verschiebevorrichtungen 400; 400-1, 400-2, 400-3 von der jeweiligen Verschiebevorrichtung 400 und damit nicht von der Oberschiene 201 der aus Oberschiene 201 und Unterschiene 202 bestehenden Sitzschiene 200 entkoppelt werden muss. Dadurch besteht nicht die Gefahr, dass der Bereich unterhalb des Fahrzeugsitzes freigehalten werden muss, damit ein Zurückklappen des Fahrzeugsitzes möglich ist. Der Bereich unterhalb des Fahrzeugsitzes 101, 102, 103 wird in der Zwischenposition II und der Easy-Entry-Position III nicht zugänglich, da das Koppelelement 10 und die Verschiebevorrichtungen 400; 400-1, 400-2, 400-3 stets mit der Oberschiene 201 in Verbindung bleiben.

### Bezugszeichenliste

- 101: Fahrzeugsitz
- 102: Fahrzeugsitz
- 112: Sitzteil
- 114: Rückenlehnenteil
- y114: Lehnenschwenkachse
- 115: Kulisse
- 116: Schwinge
- y116: Schwingen-Schwenkachse
- 10: Koppelelement
- 10-1: Ausnehmung
- y10a: erste Koppelelement-Schwenkachse
- y10b: zweite Koppelelement-Schwenkachse
- 118: Schwenkarm
- y118a: obere Schwenkarm-Schwenkachse
- y118b: untere Schwenkarm-Schwenkachse
- 119: vorderes Fußteil
- 121: hinteres Fußteil
- 125: Hebelgelenk
- y125: Hebelgelenk-Schwenkachse
- 200: Sitzschiene
- 201: Oberschiene
- 202: Unterschiene
- 300: Rückenlehnenentriegelungseinheit
- 400: Verschiebevorrichtung
- 400-1: Verschiebe-Gleitvorrichtung (erste Ausführungsform)
- 400-2: Verschiebe-Gleitvorrichtung (zweite Ausführungsform)
- 400-3: Verschiebe-Kulissenvorrichtung (dritte Ausführungsform)
- 400-31: Kulisse
- 500: Sitzschienenentriegelungseinheit
- Δ×1: erster horizontaler Verstellweg, erstes horizontales Längenmaß
- Δ×1a: erster Rückenlehnenteil-Verstellweg
- Δ×1b: erster Sitzteil-Verstellweg
- Δ×2: zweiter horizontaler Verstellweg, zweites horizontales Längenmaß
- Δz: vertikaler Verstellweg, vertikales Längenmaß
- I: Ausgangsposition
- II: Zwischenposition
- III: Endposition (Easy-Entry-Position)
- +x: Richtung in der üblichen Fahrtrichtung eines Fahrzeugs
- -x: Richtung entgegen der üblichen Fahrtrichtung +x
- y: Richtung in der Horizontalen quer zur x-Richtung
- z: Richtung in der Vertikalen quer zur x-Richtung

## Patentansprüche

1. Sitz (101, 102, 103) mit einem Sitzverstellmechanismus zum erleichterten Einstieg und Ausstieg einer Person in/aus einen/einem Innenraum eines Kraftfahrzeuges, bei dem ein Rückenlehnenteil (114) über eine Schwinge (116) mit einem Sitzteil (112) zwangsgekoppelt ist, so dass eine Verstellbewegung des Rückenlehnenteiles (114) auf das Sitzteil (112) übertragen wird, **dadurch gekennzeichnet, dass** das Rückenlehnenteil (114) und das Sitzteil (112) des Sitzes (101, 102, 103) in einem ersten Schritt ausgehend von einer Ausgangsposition (I) um ein erstes vorgebbares horizontales Längenmaß Δ×1) mittels einer mit einer Oberschiene (201) einer Sitzschiene (200) in Verbindung stehenden Verschiebevorrichtung (400; 400-1, 400-2, 400-3) in eine Zwischenposition (II) verlagert werden, wobei das Rückenlehnenteil (114) über ein gegenüber der Verschiebevorrichtung (400; 400-1, 400-2, 400-3) um eine erste Koppelelement-Schwenkachse (y10a) verschwenkbares Koppelelement (10) starr mit einer Rückenlehnenentriegelungseinheit (300) des Rückenlehnenteiles (114) in Verbindung steht, wobei das Koppelelement (10) stets mit der Verschiebevorrichtung (400; 400-1, 400-2, 400-3) und damit mit der Oberschiene (201) gekoppelt ist, wodurch das Rückenlehnenteil (114) um einen ersten vorgebbaren horizontalen Rückenlehnenteil-Verstellweg (Δx1a) in Längsrichtung (+x) verschoben und gleichzeitig die Neigung des Rückenlehnenteiles (114) von seiner Ausgangsposition (I) um einen vorgebbaren Winkel (α) in seine Zwischenposition (II) verstellt wird, wobei das sich auf einem Schwenkarm (118) direkt oder indirekt auf der Oberschiene (201) der Sitzschiene (200) abstützende zwangsgekoppelte Sitzteil (112) in dem ersten Schritt um einen ersten horizontalen Sitzteil-Verstellweg (Δ×1b) in Längsrichtung (+x) verschoben und eine Vorderseite des Sitzteiles (112) gleichzeitig um einen vertikalen Verstellweg (Δz) abgesenkt wird, wonach das Rückenlehnenteil (114) und das Sitzteil (112) gemeinsam in einem zweiten Schritt durch eine Entriegelung der Oberschiene (201) gegenüber einer karosseriefesten Unterschiene (202) der Sitzschiene (200) gleichzeitig um einen vorgebbaren zweiten horizontalen Verstellweg (Δ×2) weiter in Längsrichtung (+x) in eine Easy-Entry-Position (III) verschoben werden.

2. Sitz (101, 102, 103) nach Anspruch 1, **dadurch gekennzeichnet, dass** das Rückenlehnenteil (114) in jeder Position (I, II, III) unabhängig von dem Sitzteil (112) über die Rückenlehnenentriegelungseinheit (300) in seiner Neigung gegenüber dem Sitzteil (112) reversibel verstellbar ist, wobei die Rückenlehnenentriegelungseinheit (300) einen Drehverstellmechanismus mit einem am Rückenlehnenteil (114) angeordneten ersten Beschlagteil und einem am Koppelelement (10) starr angeordneten zweiten Beschlagteil aufweist.

3. Sitz (101, 102, 103) nach Anspruch 2, **dadurch gekennzeichnet, dass** das Koppelelement (10) Teil des zweiten Beschlagteiles oder mit dem zweiten Beschlagteil starr verbunden ist.

4. Sitz (101, 102, 103) nach Anspruch 1, **dadurch gekennzeichnet, dass** das Rückenlehnenteil (114) in dem ersten Schritt ausgehend von der Ausgangsposition (I) in die Zwischenposition (II) über eine Kulisse (115) einer Kulissenanbindung zwangsgesteuert und zwangsgeführt wird, wobei das Koppelelement (10) über ein Kulissenelement mit der in einem oberschienenfesten Kulissenteil angeordneten Kulisse (115) der Kulissenanbindung in Verbindung steht, wodurch das Koppelelement (10) während der Zwangssteuerung und Zwangsführung des Koppelelementes (10) über das Kulissenelement in der Kulisse (115) gegenüber der Kulisse (115) um eine zweite Koppelelement-Schwenkachse (y10b) schwenkbar ist.

5. Sitz (101, 102, 103) nach Anspruch 4, **dadurch gekennzeichnet, dass** das oberschienenfeste Kulissenteil ein oberschienenfestes vorderes Fußteil (119) ist.

6. Sitz (101, 102, 103) nach Anspruch 1, **dadurch gekennzeichnet, dass** das Rückenlehnenteil (114) in dem ersten Schritt ausgehend von der Ausgangsposition (I) in die Zwischenposition (II) über ein Hebelgelenk (125) einer Hebelgelenkanbindung zwangsgesteuert und zwangsgeführt wird, wobei das Koppelelement (10) einends schwenkbar um eine zweite Koppelelement-Schwenkachse (y10b) über das Hebelgelenk (125) und anderenends mit einer Oberschiene (201) der Sitzschiene (200) um eine Hebelgelenk-Schwenkachse (y125) in Verbindung steht, wodurch das Koppelelement (10) während der Zwangssteuerung und Zwangsführung des Koppelelementes (10) über das Hebelgelenk (125) um die zweite Koppelelement-Schwenkachse (y10b) schwenkbar ist.

7. Sitz (101, 102, 103) nach Anspruch 1, **dadurch gekennzeichnet, dass** das Rückenlehnenteil (114) in dem ersten Schritt ausgehend von der Ausgangsposition (I) in die Zwischenposition (II) über ein Hebelgelenk (125) einer Hebelgelenkanbindung zwangsgesteuert und zwangsgeführt wird, wobei das Koppelelement (10) einends schwenkbar um eine zweite Koppelelement-Schwenkachse (y10b) über das Hebelgelenk (125) und anderenends mit der Verschiebevorrichtung (400; 400-3) um eine Hebelgelenk-Schwenkachse (y125) schwenkbar in Verbindung steht, wobei die Verschiebevorrichtung (400; 400-3) mit der Oberschiene (201) der Sitzschiene (200) in starrer Verbindung steht, wodurch das Koppelelement (10) während der Zwangssteuerung und Zwangsführung des Koppelelementes (10) über das Hebelgelenk (125) um die zweite Koppelelement-Schwenkachse (y10b) schwenkbar ist.

8. Sitz (101, 102, 103) nach Anspruch 1, **dadurch gekennzeichnet, dass** die Verschiebevorrichtung (400; 400-1, 400-2, 400-3) mit der Oberschiene (201) der Sitzschiene (200) in Verbindung steht, und dabei entweder auf der Oberschiene (201) der Sitzschiene (200) oder in der Oberschiene (201) der Sitzschiene (200) oder neben der Oberschiene (201) der Sitzschiene (200) angeordnet ist.

9. Sitz (101, 102, 103) nach Anspruch 4 und 8 oder 6 und 8, **dadurch gekennzeichnet, dass** die mit der Oberschiene (201) in Verbindung stehende Verschiebevorrichtung (400) eine Verschiebe-Gleitvorrichtung (400; 400-1, 400-2) ist, die nach einer Entriegelung der Verschiebe-Gleitvorrichtung (400; 400-1, 400-2) gegenüber der Oberschiene (201) der Sitzschiene (200) reversibel verschiebbar ist, wobei die Verschiebe-Gleitvorrichtung (400; 400-1, 400-2) auf der Oberschiene (201) der Sitzschiene (200) oder in der Oberschiene (201) der Sitzschiene (200) oder neben der Oberschiene (201) der Sitzschiene (200) gleitet.

10. Sitz (101, 102, 103) nach Anspruch 7 und 8, **dadurch gekennzeichnet, dass** die Verschiebevorrichtung (400) eine Verschiebe-Kulissenvorrichtung (400; 400-3) ist, die starr mit der Oberschiene (201) der Sitzschiene (200) in Verbindung steht, wobei die Verschiebe-Kulissenvorrichtung (400; 400-3) eine Kulisse (400-31) aufweist, in die ein mit dem Koppelelement (10) in starrer Verbindung stehendes Kulissenelement eingreift, welches nach einer Entriegelung des an der Oberschiene (201) verriegelten Koppelementes (10) in der Kulisse (400-31) reversibel verschiebbar ist.

11. Sitz (101, 102, 103) nach Anspruch 1, **dadurch gekennzeichnet, dass** das Rückenlehnenteil (114) in jeder Position (I, II, III) unabhängig von dem Sitzteil (112) über eine Rückenlehnenentriegelungseinheit (300) in seiner Neigung gegenüber dem Sitzteil (112) reversibel verstellbar ist.

12. Sitz (101, 102, 103) nach Anspruch 4, **dadurch gekennzeichnet, dass** das Rückenlehnenteil (114) in dem ersten Schritt ausgehend von der Ausgangsposition (I) in die Zwischenposition (II) über eine Kulisse (115) zwangsgesteuert und zwangsgeführt wird.

13. Sitz (101, 102, 103) nach Anspruch 6, **dadurch gekennzeichnet, dass** das Rückenlehnenteil (114) in dem ersten Schritt ausgehend von der Ausgangsposition (I) in die Zwischenposition (II) über ein Hebelgelenk (125) zwangsgesteuert und zwangsgeführt wird.

## Claims

1. Seat (101, 102, 103) having a seat-adjusting mechanism for a person to enter into and exit from an interior of a motor vehicle more easily, wherein a backrest part (114) is positively coupled via a swing arm (116) to a seat part (112) so that an adjustment movement of the backrest part (114) is transmitted to the seat part (112), **characterized in that** the backrest part (114) and the seat part (112) of the seat (101, 102, 103) are displaced in a first step, starting from a starting position (I), into an intermediate position (II) by a first, predeterminable, horizontal linear measure (Δ×1) by means of a displacement device (400; 400-1, 400-2, 400-3) connected to an upper rail (201) of a seat rail (200), wherein the backrest part (114) is rigidly connected to a backrest unlocking unit (300) of the backrest part (114) via a coupling element (10) pivotable about a first coupling element pivot axis (y10a) with respect to the displacement device (400; 400-1, 400-2, 400-3), wherein the coupling element (10) is always coupled to the displacement device (400; 400-1, 400-2, 400-3) and thus to the upper rail (201), whereby the backrest part (114) is displaced in the longitudinal direction (+x) along a first, predeterminable, horizontal, backrest-part adjustment path (Δ×1a), and, at the same time, the inclination of the backrest part (114) is displaced from its starting position (I) to its intermediate position (II) at a predeterminable angle (α), wherein the positively-coupled seat part (112) supported on a pivot arm (118) directly or indirectly on the upper rail (201) of the seat rail (200) is displaced in the first step along a first, horizontal, seat-part adjustment path (Δ×1b) in the longitudinal direction (+x), and, simultaneously, a front side of the seat part (112) is lowered along a vertical adjustment path (Δz), whereupon the backrest part (114) and the seat part (112) together are simultaneously displaced further in the longitudinal direction (+x) along a predeterminable, second, horizontal adjustment path (Δ×2) into an easy-entry position (III) in a second step by unlocking the upper rail (201) relative to a lower rail (202), affixed to the bodywork, of the seat rail (200).

2. Seat (101, 102, 103) according to claim 1, **characterized in that** the backrest part (114) in each position (I, II, III) is, independently of the seat part (112), reversibly adjustable in its inclination relative to the seat part (112) via the backrest unlocking unit (300), wherein the backrest unlocking unit (300) has a rotational adjustment mechanism with a first fitting part, arranged on the backrest part (114), and a second fitting part rigidly arranged on the coupling element (10).

3. Seat (101, 102, 103) according to claim 2, **characterized in that** the coupling element (10) is part of the second fitting part or is rigidly connected to the second fitting part.

4. Seat (101, 102, 103) according to claim 1, **characterized in that** the backrest part (114) in the first step, starting from the starting position (I), is positively controlled and positively guided into the intermediate position (II) via a link (115) of a link connection, wherein the coupling element (10) is connected, via a link element, to the link (115), arranged in a link part affixed to the upper rail, of the link connection, whereby the coupling element (10) is pivotable, via the link element in the link (115), with respect to the link (115) about a second coupling element pivot axis (y10b) during the positive control and positive guidance of the coupling element (10).

5. Seat (101, 102, 103) according to claim 4, **characterized in that** the link part affixed to the upper rail is a front foot part (119) affixed to the upper rail.

6. Seat (101, 102, 103) according to claim 1, **characterized in that** the backrest part (114) in the first step, starting from the starting position (I), is positively controlled and positively guided into the intermediate position (II) via a lever joint (125) of a lever joint connection, wherein the coupling element (10), at one end, is connected pivotably about a second coupling element pivot axis (y10b) via the lever joint (125) and, at the other end, is connected to an upper rail (201) of the seat rail (200) about a lever joint pivot axis (y125), whereby the coupling element (10) is pivotable, via the lever joint (125), about the second coupling element pivot axis (y10b) during the positive control and positive guidance of the coupling element (10).

7. Seat (101, 102, 103) according to claim 1, **characterized in that** the backrest part (114) in the first step, starting from the starting position (I), is positively controlled and positively guided into the intermediate position (II) via a lever joint (125) of a lever joint connection, wherein the coupling element (10), at one end, is connected pivotably about a second coupling element pivot axis (y10b) via the lever joint (125) and, at the other end, is connected pivotably to the displacement device (400; 400-3) about a lever joint pivot axis (y125), wherein the displacement device (400; 400-3) is rigidly connected to the upper rail (201) of the seat rail (200), whereby the coupling element (10) is pivotable, via the lever joint (125), about the second coupling element pivot axis (y10b) during the positive control and positive guidance of the coupling element (10).

8. Seat (101, 102, 103) according to claim 1, **characterized in that** the displacement device (400; 400-1, 400-2, 400-3) is connected to the upper rail (201) of the seat rail (200), and is arranged either on the upper rail (201) of the seat rail (200) or in the upper rail (201) of the seat rail (200), or next to the upper rail (201) of the seat rail (200).

9. Seat (101, 102, 103) according to claims 4 and 8 or 6 and 8, **characterized in that** the displacement device (400) connected to the upper rail (201) is a sliding displacement device (400; 400-1, 400-2), which, after an unlocking of the sliding displacement device (400; 400-1, 400-2), is, relative to the upper rail (201) of the seat rail (200), reversibly displaceable, wherein the sliding displacement device (400; 400-1, 400-2) slides on the upper rail (201) of the seat rail (200) or in the upper rail (201) of the seat rail (200) or next to the upper rail (201) of the seat rail (200).

10. Seat (101, 102, 103) according to claims 7 and 8, **characterized in that** the displacement device (400) is a displacement link device (400; 400-3), which is rigidly connected to the upper rail (201) of the seat rail (200), wherein the displacement link device (400; 400-3) has a link (400-31) in which a link element rigidly connected to the coupling element (10) engages, which coupling element can be reversibly displaced in the link (400-31) after an unlocking of the coupling element (10) locked on the upper rail (201).

11. Seat (101, 102, 103) according to claim 1, **characterized in that** the backrest part (114) in each position (I, II, III), independently of the seat part (112), is reversibly adjustable in its inclination relative to the seat part (112) via a backrest unlocking unit (300).

12. Seat (101, 102, 103) according to claim 4, **characterized in that** the backrest part (114) in the first step, starting from the starting position (I), is positively controlled and positively guided into the intermediate position (II) via a link (115).

13. Seat (101, 102, 103) according to claim 6, **characterized in that** the backrest part (114) in the first step, starting from the starting position (I), is positively controlled and positively guided into the intermediate position (II) via a lever joint (125).

## Revendications

1. Siège (101, 102, 103) pourvu d'un mécanisme de réglage de siège permettant à une personne de monter dans un habitacle d'un véhicule automobile et d'en descendre facilement, dans lequel une partie dossier (114) est couplée de force avec une partie assise (112) par le biais d'une bielle oscillante (116), de telle sorte qu'un mouvement de réglage de la partie dossier (114) est transféré à la partie assise (112), **caractérisé en ce que** la partie dossier (114) et la partie assise (112) du siège (101, 102, 103) sont, dans une première étape, déplacées d'une position initiale (I) à une position intermédiaire (II) selon une première grandeur de longueur (Δ×1) horizontale pouvant être prédéfinie, au moyen d'un dispositif de déplacement (400 ; 400-1, 400-2, 400-3) relié à un rail supérieur (201) d'un rail de siège (200), la partie dossier (114) étant reliée de manière rigide à une unité de déverrouillage de dossier (300) de la partie dossier (114), par le biais d'un élément de couplage (10) pouvant pivoter par rapport au dispositif de déplacement (400 ; 400-1, 400-2, 400-3) sur un premier axe de pivotement d'élément de couplage (y10a), l'élément de couplage (10) étant toujours couplé au dispositif de déplacement (400 ; 400-1, 400-2, 400-3) et ainsi au rail supérieur (201), moyennant quoi la partie dossier (114) est déplacée dans la direction longitudinale (+x) selon un premier trajet horizontal de déplacement de partie dossier (Δ×1a) pouvant être prédéfini et l'inclinaison de la partie dossier (114) est simultanément réglée de sa position initiale (I) à sa position intermédiaire (II) selon un angle (a) pouvant être prédéfini, la partie assise (112) couplée de force s'appuyant sur un bras pivotant (118) directement ou indirectement sur le rail supérieur (201) du rail de siège (200) étant, dans la première étape, déplacée dans la direction longitudinale (+x) selon un premier trajet horizontal de déplacement de partie assise (Δ×1b) et une face avant de la partie assise (112) étant simultanément abaissée selon un trajet de déplacement vertical (Δz), à la suite de quoi la partie dossier (114) et la partie assise (112), dans une seconde étape, sont déplacées conjointement et simultanément, par un déverrouillage du rail supérieur (201) par rapport à un rail inférieur (202) du rail de siège (200), fixé à demeure sur la carrosserie, plus loin dans la direction longitudinale (+x), selon un second trajet horizontal de déplacement (Δ×2) pouvant être prédéfini, dans une position « Easy Entry » (III).

2. Siège (101, 102, 103) selon la revendication 1, **caractérisé en ce que** la partie dossier (114) peut être réglée de manière réversible en ce qui concerne son inclinaison par rapport à la partie assise (112), dans chaque position (I, II, III), indépendamment de la partie assise (112), par le biais de l'unité de déverrouillage de dossier (300), l'unité de déverrouillage de dossier (300) comportant un mécanisme de réglage en rotation pourvu d'une première ferrure disposée sur la partie dossier (114) et d'une seconde ferrure disposée rigidement sur l'élément de couplage (10).

3. Siège (101, 102, 103) selon la revendication 2, **caractérisé en ce que** l'élément de couplage (10) fait partie de la seconde ferrure ou est relié rigidement à la seconde ferrure.

4. Siège (101, 102, 103) selon la revendication 1, **caractérisé en ce que** la partie dossier (114) est, dans la première étape, commandée de force et guidée de force de la position initiale (I) à la position intermédiaire (II) par le biais d'une coulisse (115) d'une liaison à coulisse, l'élément de couplage (10) étant relié à la coulisse (115) de la liaison à coulisse disposée dans une partie coulisse fixée à demeure sur le rail supérieur par le biais d'un élément de coulisse, moyennant quoi l'élément de couplage (10) peut pivoter par rapport à la coulisse (115) sur un second axe de pivotement d'élément de couplage (y10b) pendant la commande de force et le guidage de force de l'élément de couplage (10) par le biais de l'élément de coulisse dans la coulisse (115).

5. Siège (101, 102, 103) selon la revendication 4, **caractérisé en ce que** la partie coulisse fixée à demeure sur le rail supérieur est une partie de pied avant (119) fixée à demeure sur le rail supérieur.

6. Siège (101, 102, 103) selon la revendication 1, **caractérisé en ce que** la partie dossier (114) est, dans la première étape, commandée de force et guidée de force de la position initiale (I) à la position intermédiaire (II) par le biais d'une articulation à levier (125) d'une liaison à articulation à levier, l'élément de couplage (10) étant relié, à une extrémité, de manière pivotante sur un second axe de pivotement d'élément de couplage (y10b) par le biais de l'articulation à levier (125) et, à l'autre extrémité, à un rail supérieur (201) du rail de siège (200) sur un axe de pivotement d'articulation à levier (y125), moyennant quoi l'élément de couplage (10) peut pivoter sur le second axe de pivotement d'élément de couplage (y10b) par le biais de l'articulation à levier (125) pendant la commande de force et le guidage de force de l'élément de couplage (10).

7. Siège (101, 102, 103) selon la revendication 1, **caractérisé en ce que** la partie dossier (114) est, dans la première étape, commandée de force et guidée de force de la position initiale (I) à la position intermédiaire (II) par le biais d'une articulation à levier (125) d'une liaison à articulation à levier, l'élément de couplage (10) étant relié, à une extrémité, de manière pivotante sur un second axe de pivotement d'élément de couplage (y10b) par le biais de l'articulation à levier (125) et, à l'autre extrémité, au dispositif de déplacement (400 ; 400-3) de manière pivotante sur un axe de pivotement d'articulation à levier (y125), le dispositif de déplacement (400 ; 400-3) étant relié rigidement au rail supérieur (201) du rail de siège (200), moyennant quoi l'élément de couplage (10) peut pivoter sur le second axe de pivotement d'élément de couplage (y10b) par le biais de l'articulation à levier (125) pendant la commande de force et le guidage de force de l'élément de couplage (10).

8. Siège (101, 102, 103) selon la revendication 1, **caractérisé en ce que** le dispositif de déplacement (400 ; 400-1, 400-2, 400-3) est relié au rail supérieur (201) du rail de siège (200), et est par ailleurs disposé sur le rail supérieur (201) du rail de siège (200) ou dans le rail supérieur (201) du rail de siège (200) ou à côté du rail supérieur (201) du rail de siège (200).

9. Siège (101, 102, 103) selon la revendication 4 et 8 ou 6 et 8, **caractérisé en ce que** le dispositif de déplacement (400) relié au rail supérieur (201) est un dispositif de déplacement à glissière (400 ; 400-1, 400-2), qui peut être déplacé de manière réversible par rapport au rail supérieur (201) du rail de siège (200) après un déverrouillage du dispositif de déplacement à glissière (400 ; 400-1, 400-2), le dispositif de déplacement à glissière (400 ; 400-1, 400-2) glissant sur le rail supérieur (201) du rail de siège (200) ou dans le rail supérieur (201) du rail de siège (200) ou à côté du rail supérieur (201) du rail de siège (200).

10. Siège (101, 102, 103) selon la revendication 7 et 8, **caractérisé en ce que** le dispositif de déplacement (400) est un dispositif de déplacement à coulisse (400 ; 400-3), qui est relié rigidement au rail supérieur (201) du rail de siège (200), le dispositif de déplacement à coulisse (400 ; 400-3) comportant une coulisse (400-31), dans laquelle un élément de coulisse relié rigidement à l'élément de couplage (10) est en prise, ledit élément de coulisse pouvant être déplacé de manière réversible dans la coulisse (400-31) après un déverrouillage de l'élément de couplage (10) verrouillé sur le rail supérieur (201).

11. Siège (101, 102, 103) selon la revendication 1, **caractérisé en ce que** la partie dossier (114) peut être réglée de manière réversible en ce qui concerne son inclinaison par rapport à la partie assise (112), dans chaque position (I, II, III), indépendamment de la partie assise (112), par le biais d'une unité de déverrouillage de dossier (300).

12. Siège (101, 102, 103) selon la revendication 4, **caractérisé en ce que** la partie dossier (114) est, dans la première étape, commandée de force et guidée de force de la position initiale (I) à la position intermédiaire (II) par le biais d'une coulisse (115).

13. Siège (101, 102, 103) selon la revendication 6, **caractérisé en ce que** la partie dossier (114) est, dans la première étape, commandée de force et guidée de force de la position initiale (I) à la position intermédiaire (II) par le biais d'une articulation à levier (125).
